# EUROPEAN PATENT SPECIFICATION

(11) **EP 2 151 600 B1**
(45) Date of publication and mention of the grant of the patent: **10.08.2011**
(21) Application number: 08827768.6
(22) Date of filing: 13.08.2008
(51) Int. Cl.: F16H 3/083, B62M 9/04, B62M 11/06

(54) **STEPPED AUTOMATIC TRANSMISSION DEVICE AND MOTORCYCLE WITH THE SAME**
AUTOMATISCHE SCHRITTGETRIEBEVORRICHTUNG UND MOTORRAD DAMIT
DISPOSITIF DE TRANSMISSION AUTOMATIQUE ÉTAGÉE ET MOTOCYCLETTE AVEC CELUI-CI

(30) Priority: 21.08.2007 JP 2007214312; 08.08.2008 JP 2008204932
(43) Date of publication of application: 10.02.2010
(73) Proprietor: Yamaha Hatsudoki Kabushiki Kaisha, Iwata-shi, Shizuoka 438-8501 (JP)
(72) Inventor: OISHI, Akifumi c/o YAMAHA HATSUDOKI KABUSHIKI KAISHA, Iwata-shi Shizuoka 438-8501 (JP); MURAYAMA, Takuji c/o YAMAHA HATSUDOKI KABUSHIKI KAISHA, Iwata-shi Shizuoka 438-8501 (JP); HATA, Shinichiro c/o YAMAHA HATSUDOKI KABUSHIKI KAISHA, Iwata-shi Shizuoka 438-8501 (JP)
(74) Representative: Zimmermann, Tankred Klaus
(86) International application number: PCT/JP2008/064508
(87) International publication number: WO 2009/025212

(56) References cited:
- JP-A- 56 142 773
- JP-U- 50 008 379
- JP-U- 55 102 433
- JP-U- 56 090 539
- JP-U- 58 107 927
- JP-U- 63 104 683
- US-A1- 2005 028 622

## Description

### Technical Field

The present invention relates to a stepped automatic transmission and a motorcycle including the same.

### [Background Art]

When using motorcycles, turns are made by a rider banking the vehicle body. Accordingly, it is preferable that motorcycles have a narrow vehicle width. Further, in recent years, demand for motorcycles that use an automatic transmission has been increasing. Therefore, a stepped automatic transmission that is compact in the vehicle width direction is required.

For example, JP-UM-A-62-23349 discloses a motorcycle using a three-speed stepped automatic transmission. In JP-UM-A-62-23349 a plurality of clutches of the stepped automatic transmission are arranged in the front-rear direction. This arrangement provides a stepped automatic transmission with a relatively narrow width.

For example, in the three-speed stepped automatic transmission described in , JP-UM-A-62-23349 the plurality of clutches are attached to a crank shaft and a clutch shaft disposed to the rear of the crank shaft. The crank shaft and the clutch shaft need to be disposed apart from each other in the front-rear direction. Therefore, power transmission between the crank shaft and the clutch shaft is performed via a chain that is wound around the crank shaft and the clutch shaft.

However, when the chain is used for power transmission between the crank shaft and the clutch shaft, additional components such as a chain guide, a chain tensioner are required. As a result, the number of components of the automatic transmission is increased. Moreover, the structure of the automatic transmission becomes complicated.

Further, in the stepped automatic transmission described in JP-UM-A-62-23349 , in order to secure sufficient space to arrange the chain, a planetary gear is provided on the crank shaft, and gear shifts are performed on the crank shaft. However, the planetary gear has a relatively complicated structure. As a result, the structure of the automatic transmission becomes complicated.

Furthermore, in the three-speed stepped automatic transmission like that described in JP-UM-A-62-23349, the number of gear stages is small relative to a speed range over which the vehicle is used. Accordingly, comfortable automatic shift is not necessarily achieved.

JP 50 008379 U describes a stepped transmission including an input shaft, an output shaft, and an intermediate shaft. A first clutch and a second clutch are arranged on the input shaft, and a third clutch is arranged on the output shaft. Two gear pairs are provided between the input shaft and the intermediate shaft, and two gear pairs are provided between the intermediate shaft and the output shaft. Tow of the gears on the intermediate shaft are provided with a common freewheel mechanism.

### Summary of the Invention

It is an object of the invention to provide a stepped automatic transmission with four or more speeds that has a simple configuration and an innovative structure.

This object is achieved by a stepped automatic transmission according to claim 1.

A stepped automatic transmission according to the invention is a stepped automatic transmission with four or more speeds that includes an input shaft and an output shaft.

The stepped automatic transmission according to the invention includes:
a first rotation shaft;
a second rotation shaft;
a third rotation shaft that is connected to the output shaft or that forms the output shaft;
a first clutch;
a first pair of shift gears;
a second clutch;
a second pair of shift gears;
a first pair of transmission gears;
a second pair of transmission gears;
one of a first one-way rotation transmission mechanism and a second one-way rotation transmission mechanism;
a third clutch;
a third pair of shift gears;
a fourth clutch; and
a fourth pair of shift gears.

The first rotation shaft is arranged in a direction orthogonal to an axial direction of the input shaft. The second rotation shaft is arranged in the direction orthogonal to the axial direction of the input shaft. The third rotation shaft is arranged in the direction orthogonal to the axial direction of the input shaft. The third rotation shaft is connected to the output shaft or forms the output shaft.

The first clutch includes an input side clutch member and an output side clutch member. The input side clutch member of the first clutch rotates together with the input shaft. The output side clutch member of the first clutch is capable of rotating with respect to the input shaft.

The first pair of shift gears includes a first gear and a second gear. The first gear rotates together with the output side clutch member of the first clutch. The second gear meshes with the first gear. The second gear rotates together with the first rotation shaft.

The second clutch includes an input side clutch member and an output side clutch member. The input side clutch member of the second clutch rotates together with the input shaft. The output side clutch member of the second clutch is capable of rotating with respect to the input shaft. The second clutch forms with the first clutch a group of clutches on an upstream side. The second clutch is engaged at a rotation speed of the input shaft that is different from that at which the first clutch is engaged.

The second pair of shift gears includes a third gear and a fourth gear. The third gear rotates together with the output side clutch member of the second clutch. The fourth gear meshes with the third gear. The fourth gear rotates together with the first rotation shaft. The second pair of shift gears has a gear ratio different from that of the first pair of shift gears.

The first pair of transmission gears includes a fifth gear and a sixth gear. The fifth gear rotates together with the first rotation shaft. The sixth gear meshes with the fifth gear. The sixth gear rotates together with the second rotation shaft.

The second pair of transmission gears includes a seventh gear and an eighth gear. The seventh gear rotates together with the second rotation shaft. The eighth gear meshes with the seventh gear. The eighth gear rotates together with the third rotation shaft.

The first one-way rotation transmission mechanism is disposed between the second rotation shaft and the seventh gear. The first one-way rotation transmission mechanism transmits rotation of the second rotation shaft to the seventh gear. The first one-way rotation transmission mechanism does not transmit rotation of the seventh gear to the second rotation shaft.

The second one-way rotation transmission mechanism is disposed between the third rotation shaft and the eighth gear. The second one-way rotation transmission mechanism transmits rotation of the eighth gear to the third rotation shaft. The second one-way rotation transmission mechanism does not transmit rotation of the third rotation shaft to the eighth gear.

The third clutch includes an input side clutch member and an output side clutch member. The input side clutch member of the third clutch rotates together with the second rotation shaft. The output side clutch member of the third clutch is capable of rotating with respect to the second rotation shaft.

The third pair of shift gears includes a ninth gear and a tenth gear. The ninth gear rotates together with the output side clutch member of the third clutch. The tenth gear meshes with the ninth gear. The tenth gear rotates together with the third rotation shaft. The third pair of shift gears has a gear ratio different from the gear ratios of the first pair of shift gears and the second pair of shift gears.

The fourth clutch includes an input side clutch member and an output side clutch member. The input side clutch member of the fourth clutch rotates together with the second rotation shaft. The output side clutch member of the fourth clutch is capable of rotating with respect to the second rotation shaft. The fourth clutch forms with the third clutch a group of clutches on a downstream side. The fourth clutch is engaged at a rotation speed of the second rotation shaft that is different from that at which the third clutch is engaged.

The fourth pair of shift gears includes an eleventh gear and a twelfth gear. The eleventh gear rotates together with the output side clutch member of the fourth clutch. The twelfth gear meshes with the eleventh gear. The twelfth gear rotates together with the third rotation shaft. The fourth pair of shift gears has a gear ratio different from the gear ratios of the first pair of shift gears, the second pair of shift gears and the third pair of shift gears.

In the stepped automatic transmission according to the invention, the group of clutches on the upstream side and the group of clutches on the downstream side are disposed so as to at least partially overlap in the axial direction of the input shaft.

The invention provides a stepped automatic transmission with four or more speeds that has a simple configuration and an innovative structure.

### Brief Description of the Drawings

FIG. 1 is a left side view of a scooter type vehicle according to a first embodiment.
FIG. 2 is a cross sectional view of an engine unit according to the first embodiment.
FIG. 3 is a partial cross sectional view of the engine unit according to the first embodiment.
FIG, 4 is a schematic diagram showing the structure of the engine unit according to the first embodiment.
FIG. 5 is a schematic partial cross sectional view illustrating the arrangement of rotation shafts of the engine unit according to the first embodiment.
FIG. 6 is a partial cross sectional view of the engine unit showing the structure of a group of clutches on the downstream side according to the first embodiment.
FIG. 7 is a conceptual diagram showing an oil circuit.
FIG. 8 is a partial cross sectional view of the engine unit illustrating an oil filter etc.
FIG. 9 is a schematic diagram illustrating a power transmission path in the first speed in a transmission.
FIG. 10 is a schematic diagram illustrating a power transmission path in the second speed in the transmission.
FIG. 11 is a schematic diagram illustrating a power transmission path in the third speed in the transmission.
FIG 12 is a schematic diagram illustrating a power transmission path in the fourth speed in the transmission.
FIG. 13 is a left side view of a moped according to a second embodiment.
FIG. 14 is a right side view of the moped according to the second embodiment.
FIG. FIG. 15 is a right side view of an engine unit according to the second embodiment.
FIG 16 is a cross sectional view of the engine unit according to the second embodiment.
FIG. 17 is a partial cross sectional view of the engine unit according to the second embodiment.
FIG. 18 is a partial cross sectional view of the engine unit showing the structure of a group of clutches on the downstream side according to the second embodiment.
FIG. 19 is a schematic diagram showing the structure of an engine unit according to a first modified example.
FIG. 20 is a schematic diagram showing the structure of an engine unit according to a second modified example.
FIG. 21 is a schematic diagram showing the structure of an engine unit according to a third modified example.
FIG. 22 is a schematic diagram showing the structure of an engine unit according to a fourth modified example.
FIG. 23 is a cross sectional view of an engine unit according to a fifth modified example.
FIG. 24 is a schematic partial cross sectional view illustrating the arrangement of rotation shafts of the engine unit according to the fifth modified example.
FIG. 25 is a schematic diagram showing the structure of the engine unit according to the fifth modified example.

### Description of the Reference Numerals and Signs

- 1: Scooter type vehicle (Motorcycle)
- 2: Moped (Motorcycle)
- 20: Engine unit
- 30: Engine
- 31: Transmission
- 33: Output shaft
- 52: Input shaft
- 53: First rotation shaft
- 54: Second rotation shaft
- 55: First clutch
- 56: Inner (Input side clutch member)
- 57: Outer (Output side clutch member)
- 58: First gear
- 59: Second clutch
- 60: Inner (Output side clutch member)
- 61: Outer (Input side clutch member)
- 62: Third gear
- 63: Second gear
- 64: Third rotation shaft
- 65: Fourth gear
- 66: Fourth clutch
- 67: Inner (Input side clutch member)
- 68: Outer (Output side clutch member)
- 69: Eleventh gear
- 70: Third clutch
- 71: Inner (Input side clutch member)
- 72: Outer (Output side clutch member)
- 73: Ninth gear
- 74: Seventh gear
- 75: Sixth gear
- 76: Twelfth gear
- 77: Tenth gear
- 78: Eighth gear
- 81: Group of clutches on the upstream side
- 82: Group of clutches on the downstream side
- 83: Second pair of shift gears
- 84: First pair of transmission gears
- 85: Second pair of transmission gears
- 86: First pair of shift gears
- 87: Fifth gear
- 90: Fourth pair of shift gears
- 91: Third pair of shift gears
- 93: One-way rotation transmission mechanism
- 96: One-way rotation transmission mechanism

### Best Mode for Carrying Out the Invention

### «First Embodiment»

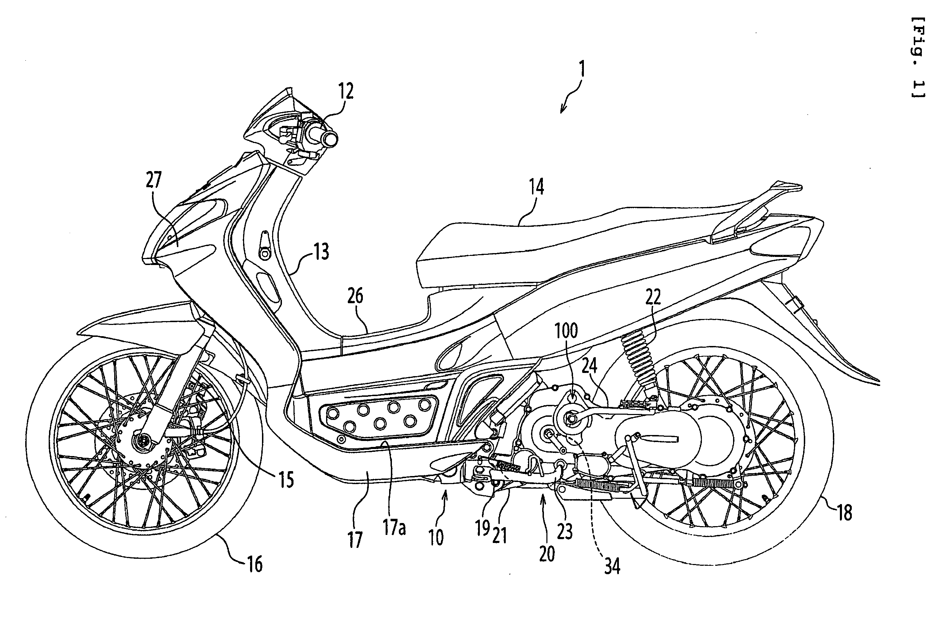

In a first embodiment, as an example of a motorcycle to which the invention is applied, a scooter type vehicle 1 shown in FIG 1 is used to explain a preferred embodiment of the invention. Note that, in the invention, the "motorcycle" is not limited to a scooter type vehicle. The term "motorcycle" indicates a motorcycle defined in a broad sense. More specifically, in the specification, the term "motorcycle" indicates any vehicle that changes direction by banking the vehicle. Accordingly, the "motorcycle" is not limited to a two-wheeled motor vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

### (Schematic structure of the scooter type vehicle 1)

First, the schematic structure of the scooter type vehicle 1 will be explained with reference to FIG. 1. Note that the terms front and rear, and left and right as used in the following description indicate the front and rear and the left and right as viewed by a rider seated on a seat 14 of the scooter type vehicle 1.

The scooter type vehicle 1 includes a body frame 10. The body frame 10 includes a head pipe which is not shown. The head pipe extends downward in a front section of the vehicle such that it is slightly inclined to the front. A steering shaft (not shown) is rotatably inserted in the head pipe. A handle 12 is provided at the upper end of the steering shaft. Moreover, a front fork 15 is connected to the lower end of the steering shaft. A front wheel 16 serving as a driven wheel is rotatably attached to the lower end of the front fork 15.

A body cover 13 is attached to the body frame 10. The body cover 13 covers a part of the body frame 10. The body cover 13 includes a leg shield 27. The leg shield 27 covers the front of the vehicle. Further, the body cover 13 is disposed to the rear of the leg shield 27, and includes foot rests 17 that are provided on the left and right sides of the vehicle. Foot rest surfaces 17a are formed on the foot rests 17. The rider's feet of the scooter type vehicle 1 are placed on the foot rest surfaces 17a.

A center cover 26 that is a part of the body cover 13 is provided between the left and right foot rests 17. The center cover 26 protrudes upward from the foot rest surfaces 17a of the foot rests 17, and is formed in a tunnel shape extending in the front-rear direction. The seat 14 on which the rider sits is attached to a section of the body cover 13 located to the rear of the center cover 26. Further, a side stand 23 is attached to the body frame 10 substantially at the center of the vehicle.

An engine unit 20 is swingably suspended from the body frame 10. More specifically, the engine unit 20 is a swing unit type engine. An engine bracket 21 is integrally connected to the engine unit 20. The engine unit 20 is swingably attached to a pivot shaft 19 of the body frame 10 via the engine bracket 21. Further, one end of a cushion unit 22 is attached to the engine unit 20. The other end of the cushion unit 22 is attached to the rear of the body frame 10. The swinging movement of the engine unit 20 is suppressed by the cushion unit 22.

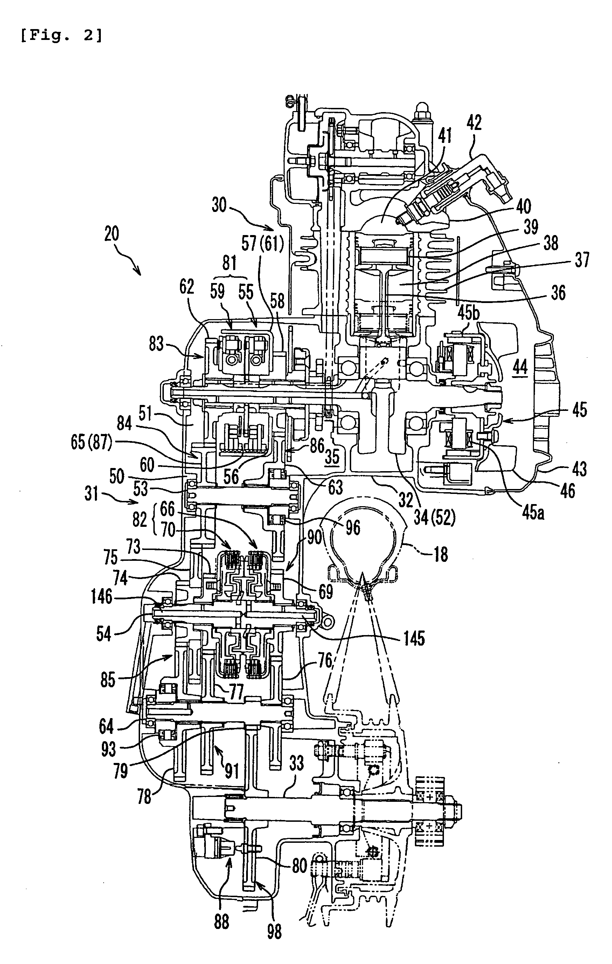

The engine unit 20 includes an output shaft 33 (refer to FIG. 2) that outputs power generated in the engine unit 20. A rear wheel 18 is attached to the output shaft 33. Accordingly, the rear wheel 18 is driven by the power generated in the engine unit 20. That is, the rear wheel 18 is a driving wheel in the first embodiment.

As shown in FIG. 2, in this embodiment, a wheel speed sensor 88 is provided on the output shaft 33. More specifically, the vehicle speed sensor 88 is provided on a fourteenth gear 80 that rotates together with the output shaft 33. Note that the vehicle speed sensor 88 may be provided on a rotation shaft other than the output shaft 33.

### (Structure of the engine unit 20)

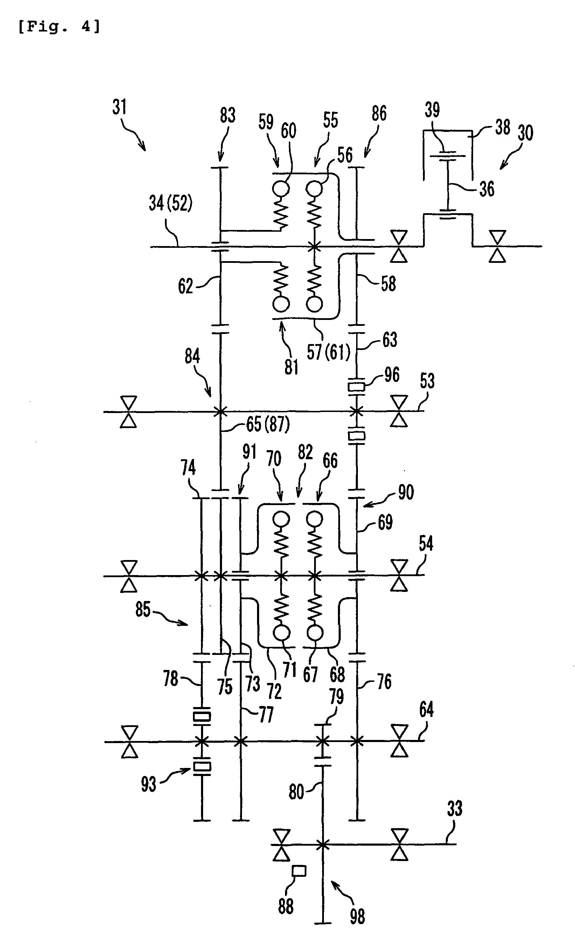

FIG. 2 is a cross sectional view of the engine unit 20. FIG. 4 is a schematic diagram showing the structure of the engine unit 20. As shown in FIG. 2, the engine unit 20 includes an engine 30 and a transmission 31. Note that, in the first embodiment, an example is described in which the engine 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is formed within and defined by the crank case 32. A cylinder 38 that opens into the crank chamber 35 is formed within and defined by the cylinder body 37. The cylinder head 40 is attached to the tip end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to the tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

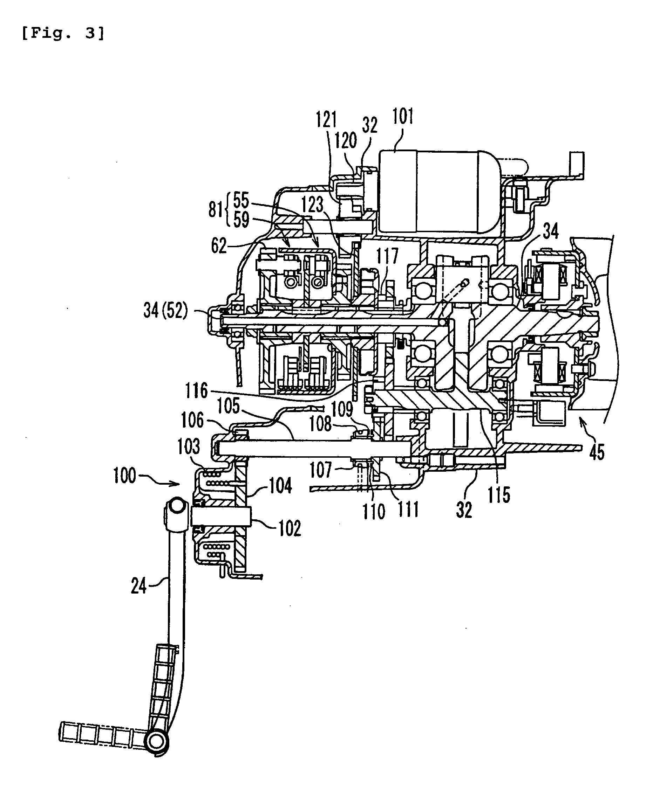

FIG. 3 is a partial cross sectional view of the engine unit 20, which shows a kick starter 100 and a starter 101. As shown in FIG 1 and FIG. 3, the engine unit 20 is provided with the kick starter 100. The rider of the scooter type vehicle 1 operates the kick starter 100 to start the engine 30.

The kick starter 100 includes a kick pedal 24. As shown in FIG 1, the kick pedal 24 is provided to the rear of and above the crank shaft 34, on the left side of the crank case 32. As shown in FIG. 3, the kick pedal 24 is attached to a kick shaft 102. A compression coil spring 103 is provided between the kick shaft 102 and the crank case 32. The compression coil spring 103 applies, to the kick shaft 102 rotated by the rider's operation, an urging force in a reverse rotating direction. Further, a gear 104 is provided on the kick shaft 102. Furthermore, a gear 106 is provided on a shaft 105 such that it cannot rotate. The gear 104 meshes with the gear 106. Rotation of the kick shaft 102 is transmitted to the shaft 105 by the gear 104 and the gear 106.

A ratchet 107 is formed on the shaft 105. A ratchet 108 is attached to a section of the shaft 105 where the ratchet 107 is formed. When the shaft 105 rotates, the ratchet 108 is guided by the ratchet 107, and moves to the right in the axial direction of the shaft 105. On the other hand, when the shaft 105 rotates in the reverse direction by the urging force of the compression coil spring 103, the ratchet 108 is guided by the ratchet 107, and moves to the left in the axial direction of the shaft 105.

An engagement section 109 is formed on the right end face of the ratchet 108. Moreover, an engagement section 110 is formed on the left end face of a gear 111 rotatably provided on the shaft 105. The engagement section 109 of the ratchet 108 engages with the engagement section 110 when the ratchet 108 moves to the right. Thus, when the ratchet 108 moves to the right, rotation of the shaft 105 is transmitted to the gear 111. The gear 111 meshes with a gear 116 formed on a balancer shaft 115. Further, the gear 116 meshes with a gear 117 formed on the crank shaft 34. Thus, rotation of the gear 111 is transmitted to the crank shaft 34 via the balancer shaft 115. Accordingly, when the kick pedal 24 is operated, the crank shaft 34 rotates and the engine 30 is started.

Note that, in a plan view, the kick shaft 102 extends toward the center of the vehicle such that it straddles the transmission 31. That is, as shown in FIG 3, the kick shaft 102 extends from the left side in the vehicle width direction toward the center of the vehicle, and is disposed such that the kick shaft 102 is aligned with a section of the transmission 31 in the up-down direction.

In addition, the starter 101 is also provided in the engine 30. The starter 101 is attached to the crank case 32. The rotation of the starter 101 is transmitted to the crank shaft 34 via gears 120, 121, and 122. Thus, when the starter 101 is driven by the rider's operation, the engine 30 is started.

### - Generator 45 -

A generator cover 43 is attached to the right side of the crank case 32. A generator housing 44 is defined by the generator cover 43 and the crank case 32.

The right end of the crank shaft 34 protrudes from the crank chamber 35 and reaches the generator housing 44. In the generator housing 44, the generator 45 is attached to the right end of the crank shaft 34. The generator 45 includes an inner 45a and an outer 45b. The inner 45a is attached such that it cannot rotate with respect to the crank case 32. On the other hand, the outer 45b is attached to the right end of the crank shaft 34. The outer 45b rotates together with the crank shaft 34. Accordingly, when the crank shaft 34 rotates, the outer 45b rotates relatively to the inner 45a. Thus, power is generated. Note that a fan 46 is provided on the outer 45b. The fan 46 rotates together with the crank shaft 34, thereby cooling the engine 30.

A transmission cover 50 is attached to the left side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes an input shaft 52 and the output shaft 33. The transmission 31 is a gear train stepped transmission in which power is transmitted from the input shaft 52 to the output shaft 33 via a plurality of pairs of shift gears.

As shown in FIG. 2, the left end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has a first rotation shaft 53, a second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

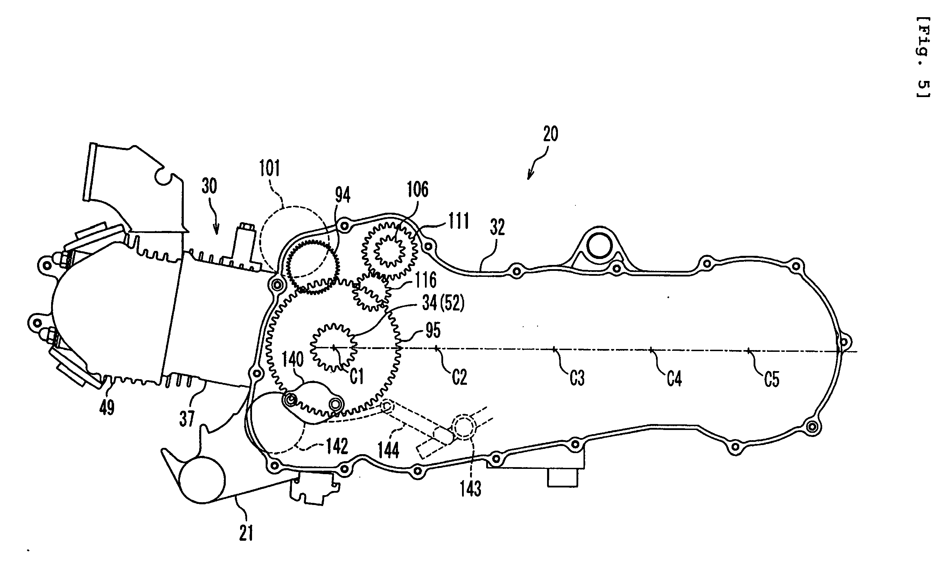

In FIG. 5, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 5, in a side view, the input shaft 52, the first rotation shaft 53, the second rotation shaft 54, the third rotation shaft 64, and the output shaft 33 are arranged in a generally horizontal direction orthogonal to the axial direction of the input shaft 52. More specifically, the axis C1 of the input shaft 52, the axis C2 of the first rotation shaft 53, the axis C3 of the second rotation shaft 54, the axis C4 of the third rotation shaft 64, and the axis C5 of the output shaft 33 are arranged in a generally horizontal line in a side view. By arranging the respective rotation shafts in this manner, the distance between the input shaft 52 and the output shaft 33 can be made relatively long. Note that, in FIG 5, the reference numeral 94 denotes an idle gear. The reference numeral 95 denotes a one-way gear for the starter.

Note that, in the first embodiment, an example will be described in which the output shaft 33 and the third rotation shaft 64 are separately provided. However, the invention is not limited to this structure. The output shaft 33 and the third rotation shaft 64 may be the same shaft. In other words, the rear wheel 18 may be attached to the third rotation shaft 64.

### - A group of clutches 81 on the upstream side -

The input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the first embodiment, the first clutch 55 and the second clutch 59 are drum type centrifugal clutches. However, the invention is not limited to this structure. The first clutch 55 and the second clutch 59 may be clutches other than centrifugal clutches. For example, the first clutch 55 and the second clutch 59 may be hydraulic clutches. However, it is preferable that the first clutch 55 is a centrifugal clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. Note that, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to a third gear 62 to be described later. When the input shaft 52 rotates, the rotation is transmitted to the inner 60 via a first pair of shift gears 86, the first rotation shaft 53, and a second pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. Note that, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the first embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be even more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together of the outer 57 of the first clutch 55. On the other hand, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The third gear 62 is provided on the inner 60 that is an output side clutch member of the second clutch 59. The third gear 62 rotates together with the inner 60. In addition, a fourth gear 65 is provided on the first rotation shaft 53. The fourth gear 65 meshes with the third gear 62. The fourth gear 65 and the third gear 62 form the second pair of shift gears 83. The second pair of shift gears 83 has a gear ratio different from that of the first pair of shift gears 86. More specifically, the second pair of shift gears 83 has a gear ratio smaller than that of the first pair of shift gears 86. The second pair of shift gears 83 is a pair of second speed shift gears.

Between the first pair of shift gears 86 and the second pair of shift gears 83, the first clutch 55 and the second clutch 59 are located. In other words, the first clutch 55 and the second clutch 59 are disposed between the first pair of shift gears 86 and the second pair of shift gears 83.

In this embodiment, the fourth gear 65 also functions as a fifth gear 87. In other words, the fourth gear 65 and the fifth gear 87 are common. A sixth gear 75 is provided on the second rotation shaft 54 such that it cannot rotate with respect to the second rotation shaft 54. The sixth gear 75 rotates together with the second rotation shaft 54. The fifth gear 87 that also functions as the fourth gear 65 meshes with the sixth gear 75. The fifth gear 87 that also functions as the fourth gear 65 and the sixth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. In addition, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits the rotation of the second rotation shaft 54 to the third rotation shaft 64. On the other hand, the eighth gear 78 does not transmit the rotation of the third rotation shaft 64 to the second rotation shaft 54. That is, the eighth gear 78 also serves as a one-way rotation transmission mechanism 93.

Note that it is not essential in the invention for the eighth gear 78 to be a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 2, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG 2, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

The third clutch 70 and the fourth clutch 66 are hydraulic clutches. More specifically, in the first embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, the first clutch 55, the second clutch 59, the fourth clutch 66, and the third clutch 70 may be drum type or disc type centrifugal clutches. Alternatively, they may be drum type or disc type hydraulic clutches. All of the first clutch 55, the second clutch 59, the fourth clutch 66, and the third clutch 70 may be centrifugal clutches. All of the first clutch 55, the second clutch 59, the fourth clutch 66, and the third clutch 70 may be hydraulic clutches. Further, from among the first clutch 55, the second clutch 59, the fourth clutch 66, and the third clutch 70, one or more clutches having a relatively large gear ratio may be a centrifugal clutch, and the other one or more clutches having a relatively small gear ratio may be a hydraulic clutch. For example, only the first clutch 55 may be a centrifugal clutch, and the other clutches 59, 66, and 70 may be hydraulic clutches. Contrarily, from among the first clutch 55, the second clutch 59, the fourth clutch 66, and the third clutch 70, one or more clutches having a relatively large gear ratio may be a hydraulic clutch, and the other one or more clutches having a relatively small gear ratio may be a centrifugal clutch.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A ninth gear 73 is attached to the outer 72 that is an output side clutch member of the third clutch 70. The ninth gear 73 rotates together with the outer 72. In addition, a tenth gear 77 is provided on the third rotation shaft 64 such that it cannot rotate with respect to the third rotation shaft 64. The tenth gear 77 rotates together with the third rotation shaft 64. The ninth gear 73 and the tenth gear 77 mesh with each other. Therefore, the rotation of the outer 72 is transmitted to the third rotation shaft 64 via the ninth gear 73 and the tenth gear 77.

The ninth gear 73 and the tenth gear 77 form a third pair of shift gears 91. The third pair of shift gears 91 has a gear ratio that is different from the ratios of the first pair of shift gears 86, the second pair of shift gears 83, and a fourth pair of shift gears 90.

The third pair of shift gears 91 is located with respect to the third clutch 70 on the same side on which the second pair of shift gears 83 is located with respect to the second clutch 59. More specifically, the third pair of shift gears 91 is located on the left side of the third clutch 70. In a similar manner, the second pair of shift gears 83 is located on the left side of the second clutch 59.

Further, the third pair of shift gears 91 and the second pair of shift gears 83 are disposed so that they at least partially overlap with each other in the vehicle width direction. In other words, the third pair of shift gears 91 and the second pair of shift gears 83 are disposed so that they at least partially overlap with each other in the axial direction of the input shaft 52. More specifically, the third pair of shift gears 91 and the second pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both the inner 67 and the outer 68 rotate together with the second rotation shaft 54.

An eleventh gear 69 is attached to the outer 68 that is an output side clutch member of the fourth clutch 66. The eleventh gear 69 rotates together with the outer 68. In addition, a twelfth gear 76 is provided on the third rotation shaft 64 such that it cannot rotate with respect to the third rotation shaft 64. The twelfth gear 76 rotates together with the third rotation shaft 64. The eleventh gear 69 and the twelfth gear 76 mesh with each other. Therefore, the rotation of the outer 68 is transmitted to the third rotation shaft 64 via the eleventh gear 69 and the twelfth gear 76.

The twelfth gear 76 and the eleventh gear 69 form the fourth pair of shift gears 90. The fourth pair of shift gears 90 has a gear ratio that is different from the ratios of the first pair of shift gears 86 and the second pair of shift gears 83.

Between the third pair of shift gears 91 and the fourth pair of shift gears 90, the third clutch 70 and the fourth clutch 66 are located. In other words, the third clutch 70 and the fourth clutch 66 are disposed between the third pair of shift gears 91 and the fourth pair of shift gears 90.

The fourth pair of shift gears 90 is located with respect to the fourth clutch 66 on the same side on which the first pair of shift gears 86 is located with respect to the first clutch 55. More specifically, the fourth pair of shift gears 90 is located on the right side of the fourth clutch 66. In a similar manner, the first pair of shift gears 86 is located on the right side of the first clutch 55.

Further, the fourth pair of shift gears 90 and the first pair of shift gears 86 are disposed so that they at least partially overlap with each other in the vehicle width direction. In other words, the fourth pair of shift gears 90 and the first pair of shift gears 86 are disposed so that they at least partially overlap with each other in the axial direction of the input shaft 52. More specifically, the fourth pair of shift gears 90 and the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the twelfth gear 76 and the tenth gear 77, in the vehicle width direction. The thirteenth gear 79 rotates together with the third rotation shaft 64. Furthermore, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

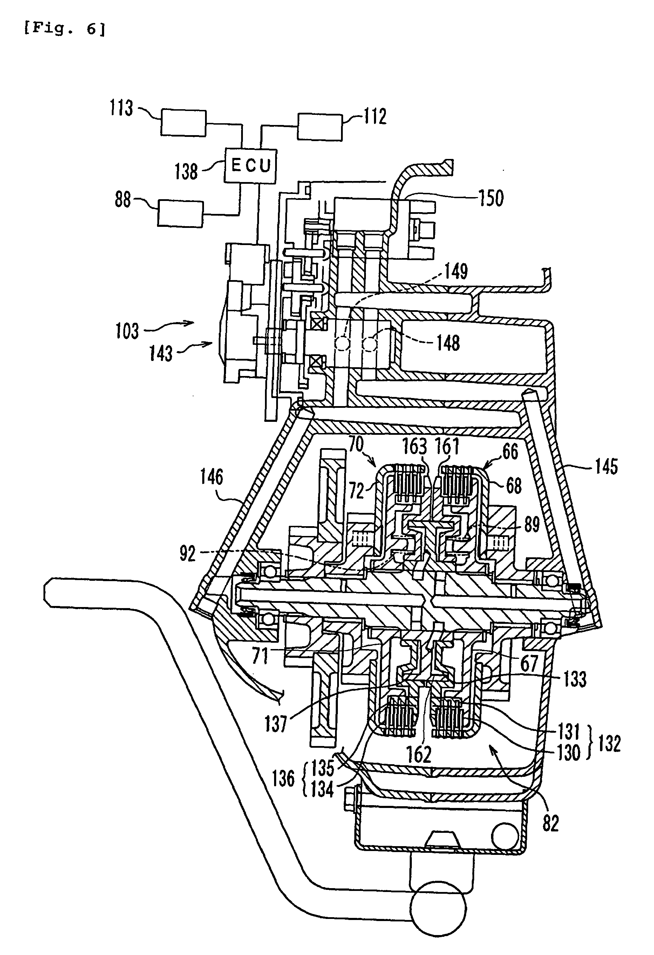

Next, with reference to FIG 6 to FIG. 8, the group of clutches 82 on the downstream side will be described in further detail.

The third clutch 70 is provided with a group of plates 136. The group of plates 136 includes a plurality of friction plates 134 and a plurality of clutch plates 135. The plurality of friction plates 134 and the plurality of clutch plates 135 are alternately laminated in the vehicle width direction. The friction plates 134 cannot rotate with respect to the outer 72. Further, the clutch plates 135 cannot rotate with respect to the inner 71.

The inner 71 can rotate with respect to the outer 72. A pressure plate 163 is disposed in the inner 71 at a side opposite to the outer 72 in the vehicle width direction. The pressure plate 163 is urged to the right in the vehicle width direction by the compression coil spring 92. That is, the pressure plate spring 163 is urged to a boss portion 162 by the compression coil spring 92.

A working chamber 137 is defined between the boss portion 162 and the pressure plate 163. The working chamber 137 is filled with oil. As the hydraulic pressure in the working chamber 137 increases, the pressure plate 163 displaces in a direction to separate from the boss portion 162. Thus, a distance between the pressure plate 163 and the inner 71 is shortened. Accordingly, the group of plates 136 is brought into a pressure contact state. As a result, the inner 71 and the outer 72 rotate together, and the third clutch 70 becomes an engaged state.

On the other hand, as the pressure in the working chamber 137 decreases, the pressure plate 163 displaces toward the boss portion 162 by the compression coil spring 92. Thus, the group of plates 136 is released from the pressure contact state. As a result, the inner 71 and the outer 72 can rotate relative to each other, and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a group of plates 132. The group of plates 132 includes a plurality of friction plates 130 and a plurality of clutch plates 131. The plurality of friction plates 130 and the plurality of clutch plates 131 are alternately laminated in the vehicle width direction. The friction plates 130 cannot rotate with respect to the outer 68. Further, the clutch plates 131 cannot rotate with respect to the inner 67.

The inner 67 can rotate with respect to the outer 68 and can displace in the vehicle width direction. A pressure plate 161 is disposed in the inner 67 at a side opposite to the outer 68 in the vehicle width direction. The pressure plate 161 is urged to the left by the compression coil spring 89 in the vehicle width direction. That is, the pressure plate 161 is urged to the boss portion 162 by the compression coil spring 89.

A working chamber 133 is defined between the boss portion 162 and the pressure plate 161. The working chamber 133 is filled with oil. As the hydraulic pressure in the working chamber 133 increases, the pressure plate 161 displaces in a direction to separate from the boss portion 162. Thus, a distance between the pressure plate 161 and the inner 67 is shortened. Accordingly, the group of plates 132 is brought into a pressure contact state. As a result, the inner 67 and the outer 68 rotate together, and the fourth clutch 66 becomes an engaged state.

On the other hand, as the pressure in the working chamber 133 decreases, the pressure plate 161 displaces toward the boss portion 162 by the compression coil spring 89. Thus, the group of plates 132 is released from the pressure contact state. As a result, the inner 67 and the outer 68 can rotate relative to each other, and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

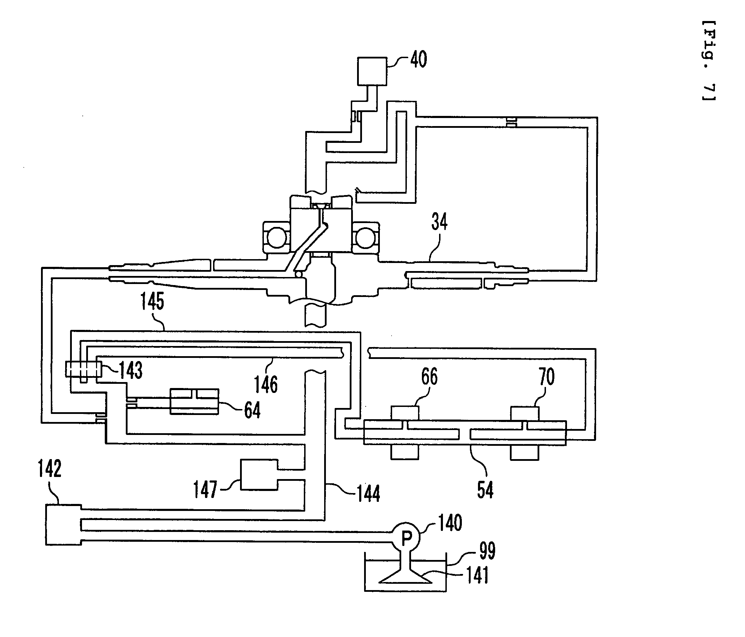

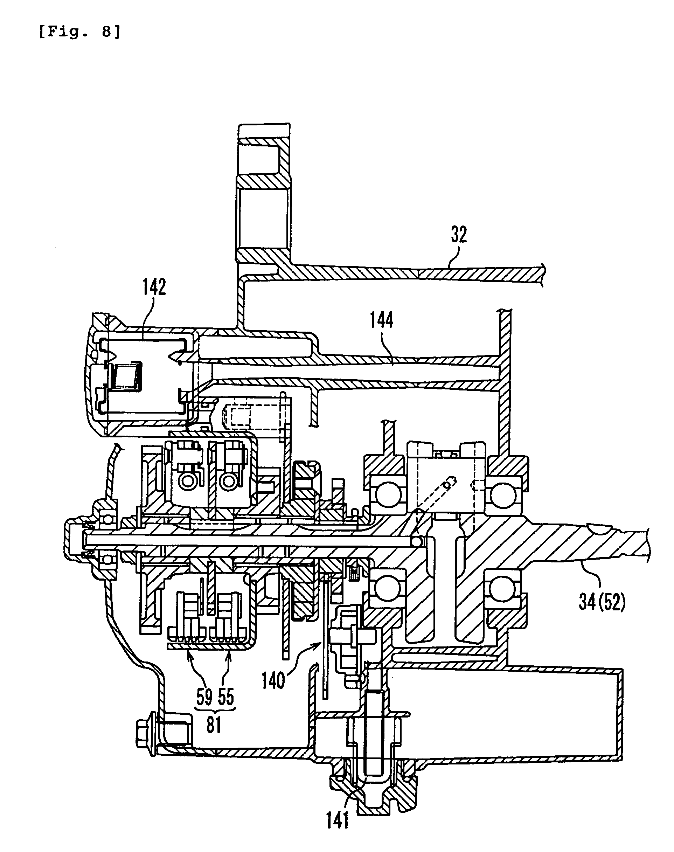

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141, which is also shown in FIG 8, is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and to a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the crank case 32 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143 and passes on the transmission cover 50 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 6, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. The actuator 103 is controlled by an ECU 138 shown in FIG. 6, and used to turn the third clutch 70 and the fourth clutch 66 ON/OFF. More specifically, the actuator 103 applies hydraulic pressure to the working chamber 133 and the working chamber 137 as necessary, thus engaging/disengaging the third clutch 70 and the fourth clutch 66.

To be more specific, as shown in FIG. 6, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a generally cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

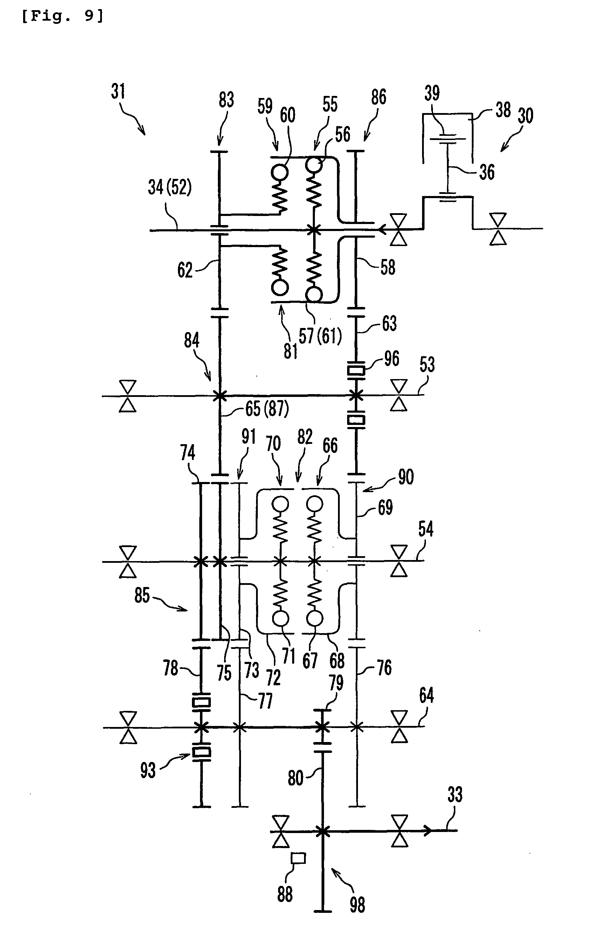

Next, the operation of the transmission 31 will be described in detail with reference to FIG. 9 to FIG. 12.

### - First speed when starting from standstill -

First, when the engine 30 is started, the crank shaft 34 (ie, the input shaft 52) starts to rotate. The inner 56 of the first clutch 55 rotates together with the input shaft 52. Therefore, when the rotation speed of the input shaft 52 becomes equal to or higher than a predetermined rotation speed (ie, the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The fifth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the scooter type vehicle 1 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

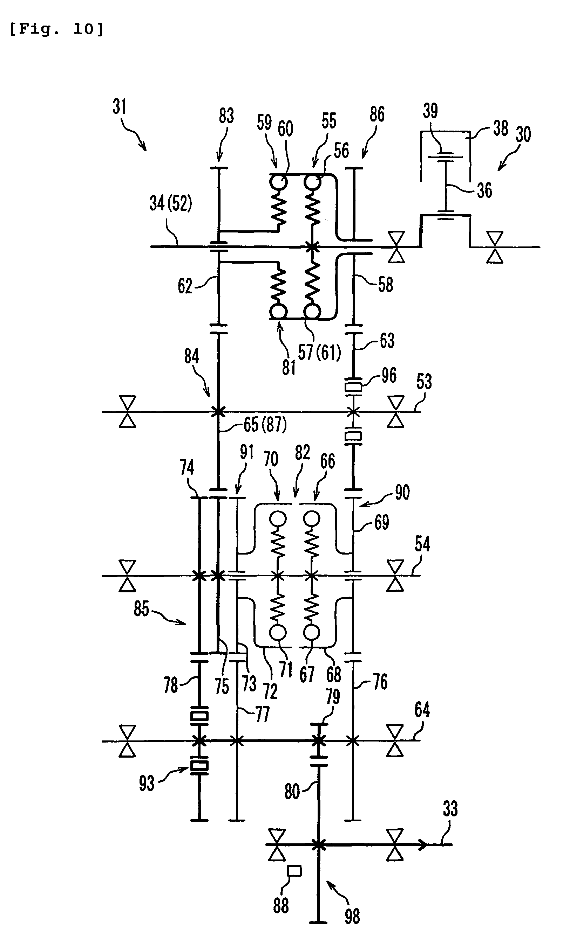

In the first speed, the fourth gear 65 common with the fifth gear 87 rotates together with the first rotation shaft 53. Therefore, the third gear 62 meshing with the fourth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged as shown in FIG. 10.

Note that, in this embodiment, the gear ratio of the second pair of shift gears 83 is smaller than the gear ratio of the first pair of shift gears 86. As a result, the rotation speed of the fourth gear 65 is higher than the rotation speed of the second gear 63. Accordingly, rotation is transmitted from the input shaft 52 to the first rotation shaft 53 via the second pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the second pair of shift gears 83, the first pair of transmission gears 84, the second pair of transmission gears 85, and the third pair of transmission gears 98, as shown in FIG. 10.

### - Third speed -

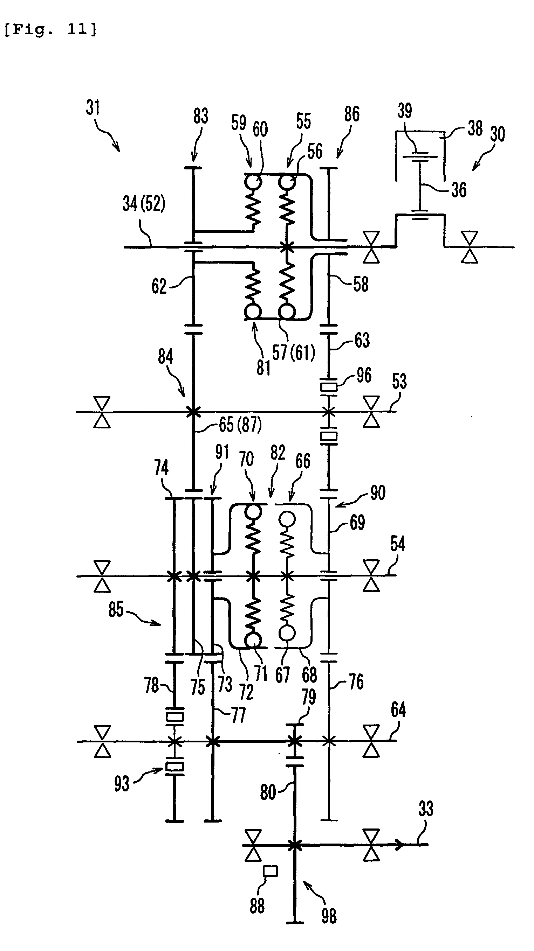

In the second speed, when the rotation speed of the crank shaft 34 (ie, the input shaft 52) becomes higher than the second rotation speed, and the vehicle speed becomes equal to or higher than a predetermined vehicle speed, the valve 143 is driven and the third clutch 70 is engaged, as shown in FIG 11. As a result, the third pair of shift gears 91 starts to rotate. Note that the gear ratio of the third pair of shift gears 91 is smaller than the gear ratio of the second pair of transmission gears 85. Therefore, the rotation speed of the tenth gear 77 of the third pair of shift gears 91 becomes higher than the rotation speed of the eighth gear 78 of the second pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the second pair of shift gears 83, the first pair of transmission gears 84, the third clutch 70, the third pair of shift gears 91, and the third pair of transmission gears 98, as shown in FIG. 11.

### - Fourth speed -

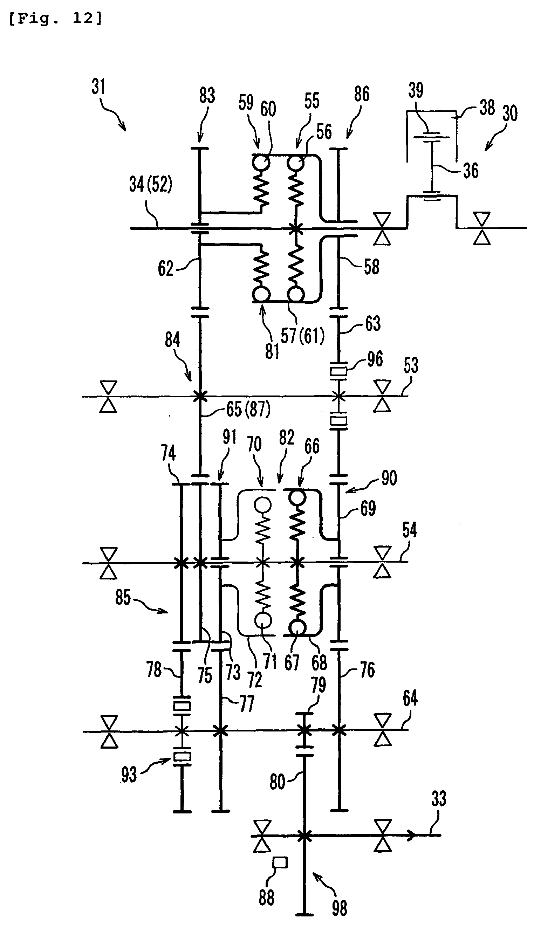

In the third speed, when the rotation speed of the crank shaft 34 (ie, the input shaft 52) further increases and the vehicle speed further increases as well, the valve 143 is driven and the fourth clutch 66 is engaged as shown in FIG. 12. On the other hand, the third clutch 70 is disengaged. As a result, the fourth pair of shift gears 90 starts to rotate. Note that the gear ratio of the fourth pair of shift gears 90 is also smaller than the gear ratio of the second pair of transmission gears 85. Therefore, the rotation speed of the twelfth gear 76 of the fourth pair of shift gears 90 becomes higher than the rotation speed of the eighth gear 78 of the second pair of transmission gears 85. Thus, the rotation of the second rotation shaft 54 is transmitted to the third rotation shaft 64 via the fourth pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

In this manner, in the fourth speed, rotation is transmitted from the input shaft 52 to the output shaft 33 via the second clutch 59, the second pair of shift gears 83, the first pair of transmission gears 84; the fourth clutch 66, the fourth pair of shift gears 90, and the third pair of transmission gears 98, as shown in FIG 12.

### (Operation and effects)

As described above, this embodiment adopts the gear train transmission 31. Accordingly, energy transmission loss is small compared to, for example, a continuously variable transmission using a V-belt. As a result, fuel economy of the vehicle can be improved.

Particularly, if a V-belt is used for an engine unit in which the distance between the input shaft 52 and the output shaft 33 is relatively large, like the engine unit 20 of the first embodiment, the length of the V-belt becomes relatively large. Therefore, fuel economy is particularly worsened, and in addition, a flapping problem of the V-belt occurs. Accordingly, the gear train transmission 31 described in this embodiment is particularly useful for the engine unit in which the distance between the input shaft 52 and the output shaft 33 is relatively large.

In this embodiment, shift is performed between the input shaft 52 and the first rotation shaft 53, and between the second rotation shaft 54 and the third rotation shaft 64. More specifically, the first pair of shift gears 86 and the second pair of shift gears 83 are provided between the input shaft 52 and the first rotation shaft 53. The third pair of shift gears 91 and the fourth pair of shift gears 90 are provided between the second rotation shaft 54 and the third rotation shaft 64. Therefore, as compared to using a change gear mechanism provided on a single rotation shaft, like a transmission using a planetary gear, the structure of the transmission 31 can be simplified. In addition, the transmission 31 can be made compact.

Further, in this embodiment, the fourth gear 65 of the second pair of shift gears 83 and the fifth gear 87 of the first pair of transmission gears 84 are common. Thus, the transmission 31 can be made more compact.

Further, as described above, in this embodiment, power transmission between the input shaft 52 and the output shaft 33 is performed by a gear train method, by utilizing the first rotation shaft 53 and the third rotation 64 that are provided for speed change. Accordingly, there is no need to provide an additional power transmission means such as a chain. Moreover, unlike the case where, for example, a chain is provided, there is no need to additionally provide a member that prevents flapping of the chain, such as a chain guide, a chain tensioner. Accordingly, the structure of the transmission 31 can be made particularly simple. In addition, the transmission 31 can be made particularly compact.

In this embodiment, the transmission 31 has four speeds. Therefore, compared to a three-speed transmission, the number of speeds is relatively large for a speed range over which the vehicle is used. Accordingly, comfortable automatic shift can be easily achieved.

In this embodiment, the input shaft 52, the first rotation shaft 53, the second rotation shaft 54, the third rotation shaft 64, and the output shaft 33 are arranged in a direction orthogonal to the axial direction of the input shaft 52 (i.e., in the front-rear direction). Therefore, the transmission 31 can be made compact in the axial direction of the input shaft 52. As a result, the width of the scooter type vehicle 1 in the vehicle width direction can be reduced. Therefore, the bank angle of the scooter type vehicle 1 can be made relatively large.

Particularly in this embodiment, the group of clutches 81 on the upstream side and the group of clutches 82 on the downstream side are disposed so that they at least partially overlap in the axial direction of the input shaft 52. Accordingly, compared to when the group of clutches 81 on the upstream side and the group of clutches 82 on the downstream side do not overlap in the axial direction of the input shaft 52, the width of the transmission 31 in the axial direction of the input shaft 52 can be made even smaller. As a result, the width of the scooter type vehicle 1 in the vehicle width direction can be made even smaller. In order to further reduce the width of the scooter type vehicle 1 in the vehicle width direction, it is preferable that the group of clutches 81 on the upstream side and the group of clutches 82 on the downstream side substantially overlap in the axial direction of the input shaft 52.

In this embodiment, the first clutch 55 and the fourth clutch 66 are disposed so that they at least partially overlap with each other in the vehicle width direction, and the second clutch 59 and the third clutch 70 are disposed so that they at least partially overlap with each other in the vehicle width direction. Accordingly, the width of the transmission 31 in the axial direction of the input shaft 52 can be made even smaller. In order to further reduce the width of the transmission 31 in the axial direction of the input shaft 52, it is preferable that the first clutch 55 and the fourth clutch 66 are disposed so that they substantially overlap in the vehicle width direction, and that the second clutch 59 and the third clutch 70 are disposed so that they substantially overlap in the vehicle width direction.

Further, in this embodiment, the first pair of shift gears 86 and the fourth pair of shift gears 90 are disposed so that they at least partially overlap with each other in the axial direction of the input shaft 52. The second pair of shift gears 83 and the third pair of shift gears 91 are disposed so that they at least partially overlap with each other. Accordingly, the width of the transmission 31 in the axial direction of the input shaft 52 can be made particularly small.

Note that, as in this embodiment, the distance between the input shaft 52 and the output shaft 33 can be made relatively long, by aligning the input shaft 52, the first rotation shaft 53, the second rotation shaft 54, the third rotation shaft 64, and the output shaft 33 such that the axes C1 to C5 are located in a substantially horizontal, straight line in a side view. In addition, the distance between the input shaft 52 and the output shaft 33 can be adjusted by adjusting the alignment of the axes C1 to C5. For example, if at least one of the axes C1 to C5 is displaced in relation to the aforementioned straight line, the distance between the input shaft 52 and the output shaft 33 can be adjusted to be made shorter.

For example, it is also conceivable that the first pair of shift gears 86 is disposed on the right side of the first clutch 55, and the fourth pair of shift gears 90 is disposed on the left side of the fourth clutch 66. Further, it is also conceivable that the second pair of shift gears 83 is disposed on the left side of the second clutch 59, and the third pair of shift gears 91 is disposed on the right side of the third clutch 70. That is, it is also conceivable that, with respect to the first clutch 55 and the fourth clutch 66 that are arranged in the front-rear direction, the first pair of shift gears 86 and the fourth pair of shift gears 90 are disposed in mutually opposite directions. It is also conceivable that, with respect to the second clutch 59 and the third clutch 70 that are arranged in the front-rear direction, the second pair of shift gears 83 and the third pair of shift gears 91 are disposed in mutually opposite directions. However, in such dispositions, the width of the transmission 31 in the vehicle width direction becomes relatively large.

On the other hand, as in this embodiment, if the fourth pair of shift gears 90 is located with respect to the fourth clutch 66 on the same side on which the first pair of shift gears 86 is located with respect to the first clutch 55, and the third pair of shift gears 91 is located with respect to the third clutch 70 on the same side on which the second pair of shift gears 83 is located with respect to the second clutch 59, the width of the transmission 31 in the vehicle width direction can be reduced. In other words, the width of the transmission 31 in the vehicle width direction can be reduced by disposing the first pair of shift gears 86 and the fourth pair of shift gears 90 on the same side with respect to the first clutch 55 and the fourth clutch 66 that are arranged in the front-rear direction, and by disposing the second pair of shift gears 83 and the third pair of shift gears 91 on the same side with respect to the second clutch 59 and the third clutch 70 that are arranged in the front-rear direction.

In order to further reduce the width of the transmission 31 in the vehicle width direction, it is preferable to dispose the plurality of clutches arranged on the same rotation shaft to be adjacent to each other. More specifically, it is preferable that the first clutch 55 and the second clutch 59 are disposed between the first pair of shift gears 86 and the second pair of shift gears 83, as in this embodiment. It is preferable that the third clutch 70 and the fourth clutch 66 are disposed between the third pair of shift gears 91 and the fourth pair of shift gears 90.

For example, the third clutch 70 and the fourth clutch 66 may be centrifugal clutches. In this case, for example, if the third clutch 70, rather than the fourth clutch 66, is engaged/disengaged when the rotation speed of the second rotation shaft 54 is low, the third clutch 70 cannot be disengaged while the fourth clutch 66 is engaged. Therefore, in order to transmit power between the second rotation shaft 54 and the third rotation shaft 64 using the fourth pair of shift gears 90 in a state where both the third clutch 70 and the fourth clutch 66 are engaged, a one-way clutch and a one-way gear are required to be provided. Accordingly, the structure of the transmission 31 tends to be complicated. On the other hand, in this embodiment, the third clutch 70 and the fourth clutch 66 are hydraulic clutches. Therefore, the third clutch 70 and the fourth clutch 66 can be freely engaged/disengaged. As a result, there is no need to additionally provide a one-way clutch and a one-way gear. Thus, the structure of the transmission 31 can be simplified.

### «Second Embodiment»

In the above-described first embodiment, as an example of the preferred embodiment of the invention, the scooter type vehicle 1 is described. However, in the invention, the motorcycle is not limited to a scooter type vehicle. In a second embodiment, as an example of the preferred embodiment of the present invention, a moped 2 will be described. Note that, in the description of the second embodiment, structural members that have a common function will be explained using reference numerals in common with the first embodiment. FIG. 4, FIG. 7, and FIG. 9 to FIG 12 will be used along with the first embodiment for reference.

### (Schematic structure of the moped 2)

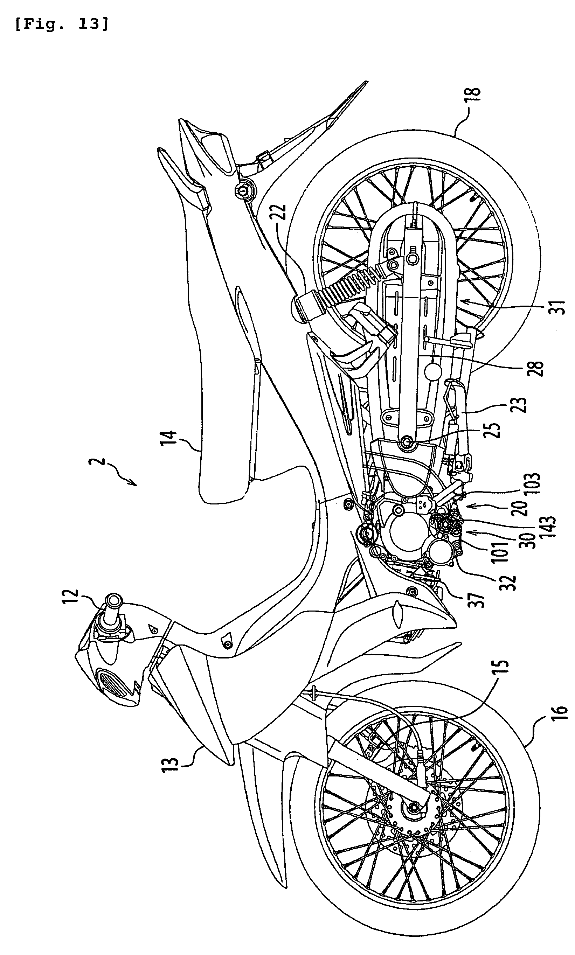

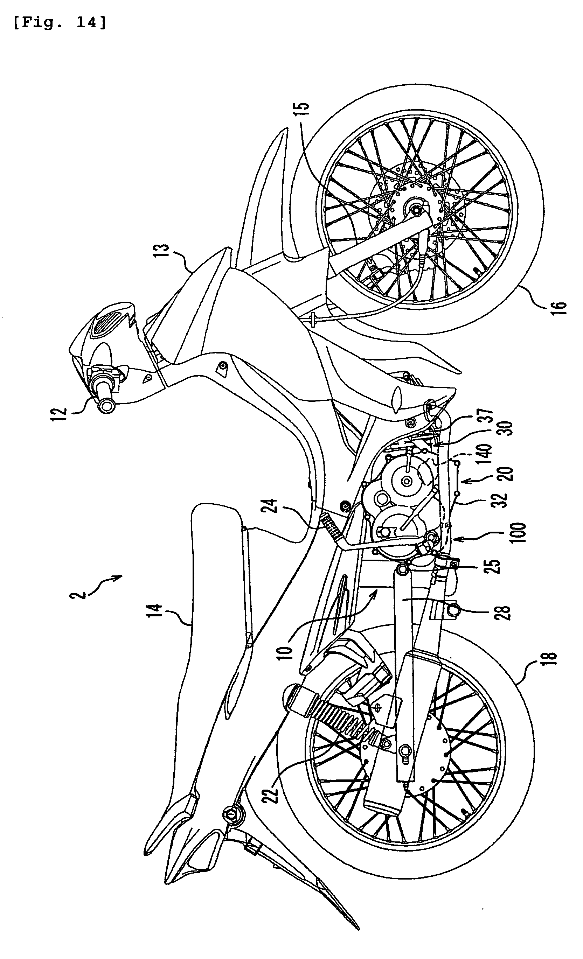

First, the schematic structure of the moped 2 will be described with reference to FIG. 13 and FIG. 14. Note that, the terms front and rear, and left and right as used in the following description indicate the front and rear and the left and right as viewed by the rider seated on a seat 14 of the moped 2.

As shown in FIG 14, the moped 2 is provided with a body frame 10. The body frame 10 includes a head pipe (not shown in the figures). The head pipe extends downward in a front section of the vehicle such that it is slightly inclined to the front. A handle 12 is provided at the upper end of the head pipe. In addition, a front fork 15 is connected to the lower end of the head pipe. A front wheel 16 serving as a driven wheel is rotatably attached to the lower end of the front fork 15.

A body cover 13 is attached to the body frame 10. The body cover 13 covers a part of the body frame 10. The seat 14 on which the rider sits is attached to the body cover 13. Further, a side stand 23 is attached to the body frame 10 substantially at the center of the vehicle.

An engine unit 20 is suspended from the body frame 10. In this embodiment, the engine unit 20 is fixed to the body frame 10. That is, the engine unit 20 is an engine unit of a rigid type. While the engine unit 20 of the first embodiment has a relatively long length in the front-rear direction, the engine unit 20 of the second embodiment has a relatively short length in the front-rear direction. More specifically, in the transmission 31 of the engine unit 20 of the first embodiment, the distance between the input shaft 52 and the output shaft 33 is relatively long. On the other hand, in a transmission 31 of the engine unit 20 of the second embodiment, the distance between an input shaft 52 and an output shaft 33 is relatively short. Therefore, the engine unit 20 of the second embodiment is particularly useful for use in a moped, an off-road vehicle, an on-road vehicle, etc. for which a relatively high driving performance is required compared to a scooter type vehicle.

A rear arm 28 that extends rearward is attached to the body frame 10. The rear arm 28 can swing around a pivot shaft 25. A rear wheel 18 as a drive wheel is rotatably attached to the rear end of the rear arm 28. The rear wheel 18 is connected to the output shaft 33, of the transmission 31 by power transmitting means (not shown in the figures). Thus, the rear wheel 18 is driven by the engine unit 20. Further, one end of a cushion unit 22 is attached to the rear end of the rear arm 28. The other end of the cushion unit 22 is attached to the body frame 10. This cushion unit 22 suppresses swinging movement of the rear arm 28.

As shown in FIG. 4, in this embodiment, a vehicle speed sensor 88 is provided on the output shaft 33. More specifically, the vehicle speed sensor 88 is provided on a fourteenth gear 80 that rotates together with the output shaft 33. However, the vehicle speed sensor 88 may be provided on a rotation shaft other than the output shaft 33. The vehicle speed sensor 88 may be provided on another member that rotates at a given rotation ratio with respect to the output shaft 33.

### (Structure of the engine unit 20)

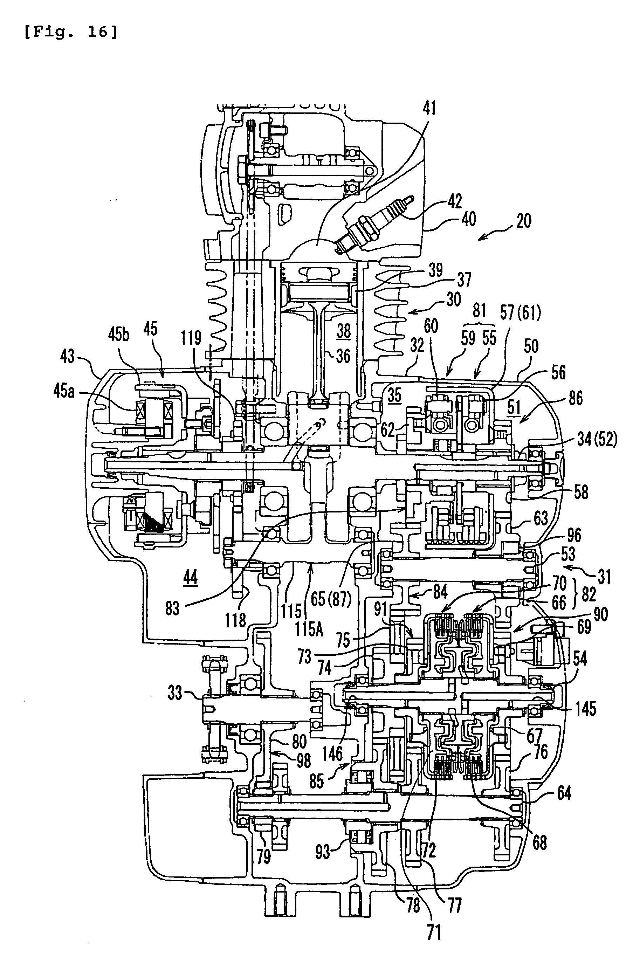

FIG. 16 is a cross sectional view of the engine unit 20. FIG. 4 is a schematic diagram showing the structure of the engine unit 20. As shown in FIG 16, the engine unit 20 includes an engine 30 and the transmission 31. Note that, in the second embodiment, an example is described in which the engine 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is defined in the crank case 32. A cylinder 38 that opens to the crank chamber 35 is defined in the cylinder body 37. The cylinder head 40 is attached to the tip end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to a tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

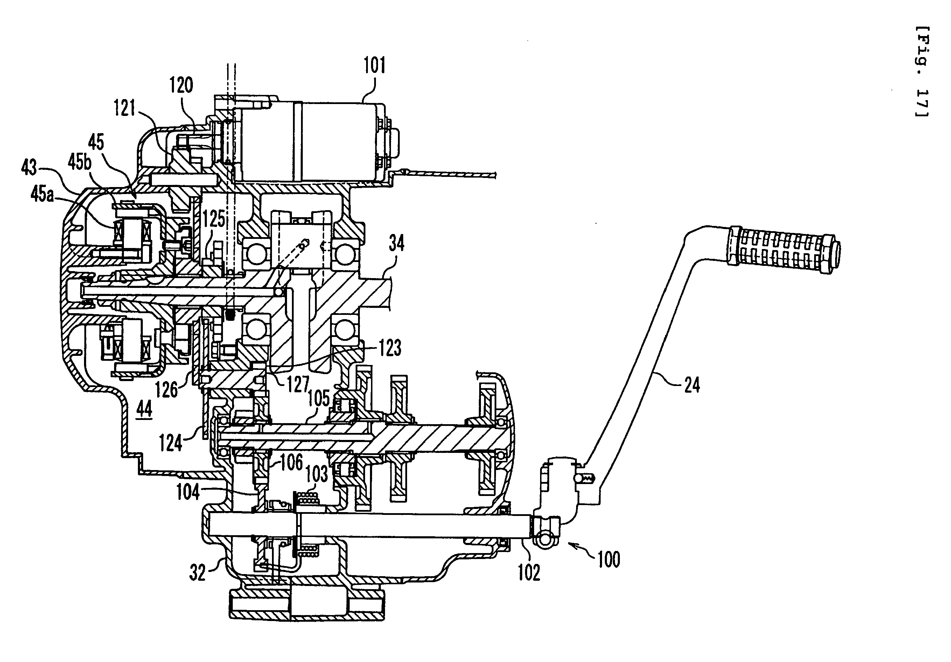

FIG. 17 is a partial cross sectional view of the engine unit 20 that shows a kick starter 100 and a starter 101. As shown in FIG 14 and FIG. 17, the engine unit 20 is provided with the kick starter 100. The rider of the moped 2 can start the engine 30 by operating the kick starter 100.

The kick starter 100 includes a kick pedal 24. As shown in FIG. 14, the kick pedal 24 is provided to the rear of and below the crank shaft 34, on the right side of the crank case 32. The kick pedal 24 is attached to a kick shaft 102. A compression coil spring 103 is provided between the kick shaft 102 and the crank case 32. The compression coil spring 103 applies, to the kick shaft 102 rotated by the rider's operation, an urging force in a reverse rotating direction. Further, a gear 104 is provided on the kick shaft 102. On the other hand, a gear 106 is rotatably provided on a shaft 105. The gear 104 meshes with the gear 106. Rotation of the kick shaft 102 is transmitted to the crank shaft 34 via the gear 104 or the like. Further, the gear 106 meshes with a gear 123 provided on a shaft 127. Accordingly, the rotation of the gear 104 is transmitted to the shaft 127 via the gear 106 and the gear 123. A gear 124 is provided on the shaft 127. The gear 124 meshes with a gear 125 provided on the crank shaft 34. Accordingly, the rotation of the gear 127 is transmitted to the crank shaft 34 via the gear 124 and the gear 125. Therefore, the crank shaft 34 is rotated by the rider operating the kick pedal 24.

In addition, the starter 101 is also provided in the engine 30. The starter 101 is attached to the crank case 32. The rotation of the starter 101 is transmitted to the crank shaft 34 via gears 120, 121, and 126. Thus, when the starter 101 is driven by the rider's operation, the engine 30 is started.

### - Balancer shaft 115 -

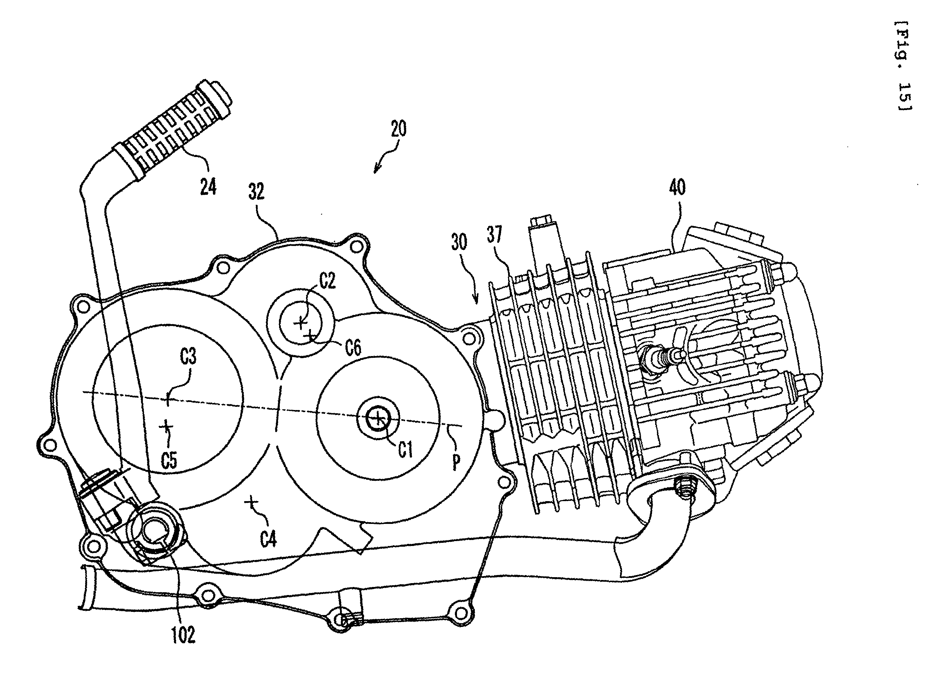

As shown in FIG. 16, a balancer 115A having a balancer shaft 115 is provided in the engine 30. A gear 118 is provided on the balancer shaft 115. The gear 118 meshes with a gear 119 provided on the crank shaft 34. Accordingly, the balancer shaft 115 rotates together with the crank shaft 34: As shown in FIG. 16 and FIG. 15, an axis C6 of the balancer shaft 115 is provided close to an axis C2 of a second rotation shaft 54. As shown in FIG. 16, when viewed from the axial direction of a first rotation shaft 53, at least a part of the first rotation shaft 53, a second gear 63, or a ninth gear 87, and at least a part of the balancer 115A are disposed to overlap with each other. Particularly, the balancer shaft 115 is disposed so that at least a part thereof overlaps with the first rotation shaft 53 when viewed from the axial direction of the first rotation shaft 53. The balancer shaft 115 is located at the center, in the vehicle width direction, of the crank shaft 34 to which a connecting rod 36 is connected. On the other hand, the first rotation shaft 53 is located on the right side in the vehicle width direction. The balancer shaft 115 and the first rotation shaft 53 are offset in the vehicle width direction. In other words, the balancer shaft 115 and the first rotation shaft 53 are disposed so as not to overlap with each other in the vehicle width direction.

### - Generator 45 -

As shown in FIG. 16 and FIG. 17, a generator cover 43 is attached to the left side of the crank case 32. A generator housing 44 is defined by the generator cover 43 and the crank case 32.

The left end of the crank shaft 34 protrudes from the crank chamber 35 and reaches the generator housing 44. The generator 45 is attached to the left end of the crank shaft 34 in the generator housing 44. The generator 45 includes an inner 45a and an outer 45b. The inner 45a is attached such that it cannot rotate with respect to the crank case 32. Note that, the outer 45b is attached to the left end of the crank shaft 34. The outer 45b rotates together with the crank shaft 34. Accordingly, when the crank shaft 34 rotates, the outer 45b rotates relatively with respect to the inner 45a. Thus, power generation is performed.

A transmission cover 50 is attached to the right side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes the input shaft 52 and the output shaft 33. The transmission 31 is a gear train stepped transmission in which power is transmitted from the input shaft 52 to the output shaft 33 via a plurality of pairs of shift gears.

The right end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has the first rotation shaft 53, the second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

In FIG. 15, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 15, all of the rotation shafts of the input shaft 52, the first rotation shaft 53, the second rotation shaft 54, and the third rotation shaft 64 are arranged adjacent to each other, in a side view. In other words, the input shaft 52, the first rotation shaft 53, the second rotation shaft 54, and the third rotation shaft 64 are arranged such that the axis C1 of the input shaft 52, the axis C2 of the first rotation shaft 53, the axis C3 of the second rotation shaft 54, and the axis C4 of the third rotation shaft 64 form a rectangular shape in a side view.

As shown in FIG 15, at least one of the axis C2 of the first rotation shaft 53 and the axis C4 of the third rotation shaft 64 is not located on a plane P that includes the axis C1 of the input shaft 52 and the axis C3 of the second rotation shaft 54. In more detail, the axis C2 of the first rotation shaft 53 is located on one side of the plane P, while the axis C4 of the third rotation shaft 64 is located on the other side of the plane P. More specifically, the axis C2 of the first rotation shaft 53 is located on the upper side of the plane P, while the axis C4 of the third rotation shaft 64 is located on the lower side of the plane P. Therefore, the axis C2 of the first rotation shaft 53 is located at a position that is relatively further upward, while the third rotation shaft 64 is located at a position that is relatively further downward.

The axis C4 of the third rotation shaft 64 is located in front of the axis C3 of the second rotation shaft 54, in the front-rear direction. In more detail, the axis C4 of the third rotation shaft 64 is located between the axis C3 of the second rotation shaft 54 and the axis C1 of the input shaft 52, in the front-rear direction.

As shown in FIG. 15, the axis C5 of the output shaft 33 is located above and to the rear of the axis C4 of the third rotation shaft 64. In a side view, the axis C5 of the output shaft 33 is located outside of a virtual rectangle formed by the axis C1 of the input shaft 52, the axis C2 of the first rotation shaft 53, the axis C3 of the second rotation shaft 54, and the axis C4 of the third rotation shaft 64. The axis C5 of the output shaft 33 is located, in a side view, to the rear of the axis C3 of the second rotation shaft 54.

Note that the plane P extends upward to the rear. That is, the axis C3 of the second rotation shaft 54 is located in a higher position than the axis C1 of the input shaft 52.

Note that, in the second embodiment, an example will be described in which the output shaft 33 and the third rotation shaft 64 are separately provided. However, the invention is not limited to this structure. The output shaft 33 and the third rotation shaft 64 may be common. In other words, the rear wheel 18 may be attached to the third rotation shaft 64.

### - A group of clutches 81 on the upstream side -

As shown in FIG. 16 and FIG 4, the input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the second embodiment, the first clutch 55 and the second clutch 59 are drum type centrifugal clutches. However, the invention is not limited to this structure. The first clutch 55 and the second clutch 59 may be clutches other than centrifugal clutches. For example, the first clutch 55 and the second clutch 59 may be hydraulic clutches. However, it is preferable that the first clutch 55 is a centrifugal clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. On the other hand, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to a third gear 62 to be described later. When the input shaft 52 rotates, the rotation is transmitted to the inner 60 via a first pair of shift gears 86, the first rotation shaft 53, and a second pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. On the other hand, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the second embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together with the outer 57 of the first clutch 55. In addition, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The third gear 62 is provided on the inner 60 that is an output side clutch member of the second clutch 59. The third gear 62 rotates together with the inner 60. In addition, a fourth gear 65 is provided on the first rotation shaft 53. The fourth gear 65 meshes with the third gear 62. The fourth gear 65 and the third gear 62 form the second pair of shift gears 83. The second pair of shift gears 83 has a gear ratio different from that of the first pair of shift gears 86. More specifically, the second pair of shift gears 83 has a gear ratio smaller than that of the first pair of shift gears 86. The second pair of shift gears 83 is a pair of second speed shift gears.

Between the first pair of shift gears 86 and the second pair of shift gears 83, the first clutch 55 and the second clutch 59 are located. In other words, the first clutch 55 and the second clutch 59 are disposed between the first pair of shift gears 86 and the second pair of shift gears 83.

In this embodiment, the fourth gear 65 also functions as a fifth gear 87. In other words, the fourth gear 65 and the fifth gear 87 are common. A sixth gear 75 is provided on the second rotation shaft 54 such that it cannot rotate with respect to the second rotation shaft 54. The sixth gear 75 rotates together with the second rotation shaft 54. The fifth gear 87 that also functions as the fourth gear 65 meshes with the sixth gear 75. The fifth gear 87 that also functions as the fourth gear 65 and the sixth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. Moreover, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits rotation of the second rotation shaft 54 to the third rotation shaft 64. On the other hand, the eighth gear 78 does not transmit rotation of the third rotation shaft 64 to the second rotation shaft 54. That is, the eighth gear 78 also serves as a one-way rotation transmission mechanism 93.

Note that it is not essential in the invention that the eighth gear 78 is a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 16, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG 16, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

The third clutch 70 and the fourth clutch 66 are hydraulic clutches. More specifically, in the second embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, the first clutch 55, the second clutch 59, the fourth clutch 66, and the third clutch 70 may be drum type or disc type centrifugal clutches. Alternatively, they may be drum type or disc type hydraulic clutches. All of the first clutch 55, the second clutch 59, the fourth clutch 66, and the third clutch 70 may be centrifugal clutches. All of the first clutch 55, the second clutch 59, the fourth clutch 66, and the third clutch 70 may be hydraulic clutches. Further, from among the first clutch 55, the second clutch 59, the fourth clutch 66, and the third clutch 70, one or more clutches having a relatively large gear ratio may be a centrifugal clutch, and the other one or more clutches having a relatively small gear ratio may be a hydraulic clutch. For example, only the first clutch 55 may be a centrifugal clutch, and the other clutches 59, 66, and 70 may be hydraulic clutches. Contrarily, from among the first clutch 55, the second clutch 59, the fourth clutch 66, and the third clutch 70, one or more clutches having a relatively large gear ratio may be a hydraulic clutch, and the other one or more clutches having a relatively small gear ratio may be a centrifugal clutch.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A ninth gear 73 is attached to the outer 72 that is an output side clutch member of the third clutch 70. The ninth gear 73 rotates together with the outer 72. On the other hand, a tenth gear 77 is provided on the third rotation shaft 64 such that it cannot rotate with respect to the third rotation shaft 64. The tenth gear 77 rotates together with the third rotation shaft 64. The ninth gear 73 and the tenth gear 77 mesh with each other. Therefore, the rotation of the outer 72 is transmitted to the third rotation shaft 64 via the ninth gear 73 and the tenth gear 77.

The ninth gear 73 and the tenth gear 77 form a third pair of shift gears 91. The third pair of shift gears 91 has a gear ratio that is different from those of the first pair of shift gears 86, the second pair of shift gears 83, and a fourth pair of shift gears 90.

The third pair of shift gears 91 is located with respect to the third clutch 70 on the same side on which the second pair of shift gears 83 is located with respect to the second clutch 59. More specifically, the third pair of shift gears 91 is located on the left side of the third clutch 70. In a similar manner, the second pair of shift gears 83 is located on the left side of the second clutch 59.

Further, the third pair of shift gears 91 and the second pair of shift gears 83 are disposed so that they at least partially overlap with each other in the vehicle width direction. In other words, the third pair of shift gears 91 and the second pair of shift gears 83 are disposed so that they at least partially overlap with each other in the axial direction of the input shaft 52. More specifically, the third pair of shift gears 91 and the second pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both of the inner 67 and the outer 68 rotate together with the second rotation shaft 54.

An eleventh gear 69 is attached to the outer 68 that is an output side clutch member of the fourth clutch 66. The eleventh gear 69 rotates together with the outer 68. On the other hand, a twelfth gear 76 is provided on the third rotation shaft 64 such that it cannot rotate with respect to the third rotation shaft 64. The twelfth gear 76 rotates together with the third rotation shaft 64. The eleventh gear 69 and the twelfth gear 76 mesh with each other. Therefore, the rotation of the outer 68 is transmitted to the third rotation shaft 64 via the eleventh gear 69 and the twelfth gear 76.

The twelfth gear 76 and the eleventh gear 69 form the fourth pair of shift gears 90. The fourth pair of shift gears 90 has a gear ratio that is different from those of the first pair of shift gears 86, the second pair of shift gears 83, and the third pair of shift gears 91.

Between the third pair of shift gears 91 and the fourth pair of shift gears 90, the third clutch 70 and the fourth clutch 66 are located. In other words, the third clutch 70 and the fourth clutch 66 are disposed between the third pair of shift gears 91 and the fourth pair of shift gears 90.

The fourth pair of shift gears 90 is located with respect to the fourth clutch 66 on the same side on which the first pair of shift gears 86 is located with respect to the first clutch 55. More specifically, the fourth pair of shift gears 90 is located on the right side of the fourth clutch 66. In a similar manner, the first pair of shift gears 86 is located on the right side of the first clutch 55.

Further, the fourth pair of shift gears 90 and the first pair of shift gears 86 are disposed so that they at least partially overlap with each other in the vehicle width direction. In other words, the fourth pair of shift gears 90 and the first pair of shift gears 86 are disposed so that they at least partially overlap with each other in the axial direction of the input shaft 52. More specifically, the fourth pair of shift gears 90 and ' the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the twelfth gear 76 and the tenth gear 77, in the vehicle width direction. The thirteenth gear 79 rotates together with the third rotation shaft 64. On the other hand, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

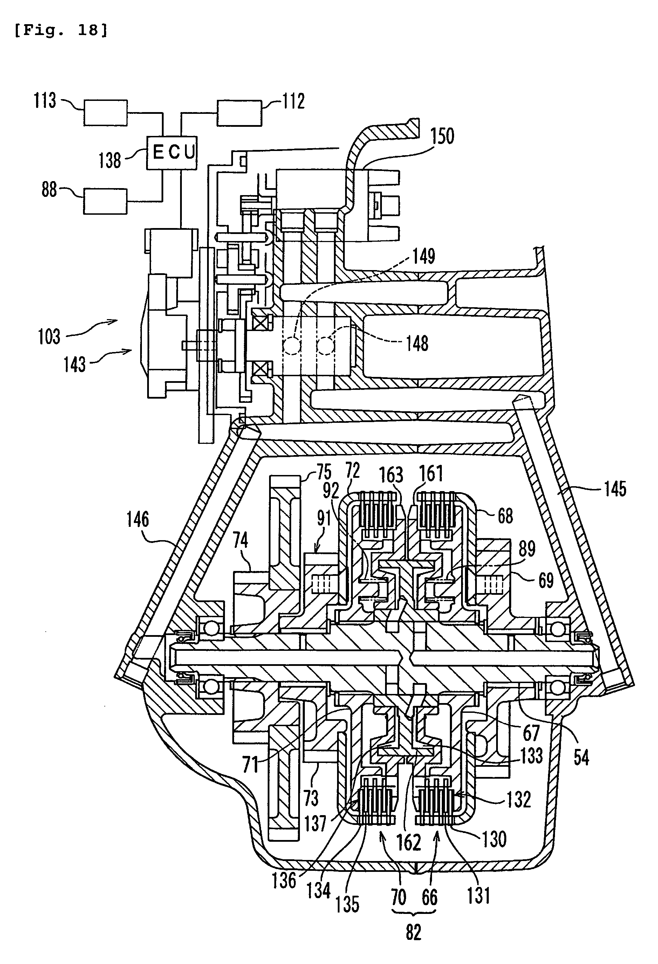

Next, referring mainly to FIG. 18, the group of clutches 82 on the downstream side will be described in further detail.

The third clutch 70 is provided with a group of plates 136. The group of plates 136 includes a plurality of friction plates 134 and a plurality of clutch plates 135. The plurality of friction plates 134 and the plurality of clutch plates 135 are alternately laminated in the vehicle width direction. The friction plates 134 cannot rotate with respect to the outer 72. Further, the clutch plates 135 cannot rotate with respect to the inner 71.

The inner 71 can rotate with respect to the outer 72. A pressure plate 163 is disposed in the inner 71 at a side opposite to the outer 72 in the vehicle width direction. The pressure plate 163 is urged to the right in the vehicle width direction by the compression coil spring 92. That is, the pressure plate spring 163 is urged to a boss portion 162 by the compression coil spring 92.

A working chamber 137 is defined between the boss portion 162 and the pressure plate 163. The working chamber 137 is filled with oil. As the hydraulic pressure in the working chamber 137 increases, the pressure plate 163 displaces in a direction to separate from the boss portion 162. Thus, a distance between the pressure plate 163 and the inner 71 is shortened. Accordingly, the group of plates 136 is brought into a pressure contact state. As a result, the inner 71 and the outer 72 rotate together, and the third clutch 70 becomes an engaged state.

On the other hand, as the pressure in the working chamber 137 decreases, the pressure plate 163 displaces toward the boss portion 162 by the compression coil spring 92. Thus, the group of plates 136 is released from the pressure contact state. As a result, the inner 71 and the outer 72 can rotate relative to each other, and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a group of plates 132. The group of plates 132 includes a plurality of friction plates 130 and a plurality of clutch plates 131. The plurality of friction plates 130 and the plurality of clutch plates 131 are alternately laminated in the vehicle width direction. The friction plates 130 cannot rotate with respect to the outer 68. On the other hand, the clutch plates 131 cannot rotate with respect to the inner 67.

The inner 67 can rotate with respect to the outer 68 and can displace in the vehicle width direction. A pressure plate 161 is disposed in the inner 67 at a side opposite to the outer 68 in the vehicle width direction. The pressure plate 161 is urged to the left by the compression coil spring 89 in the vehicle width direction. That is, the pressure plate 161 is urged to the boss portion 162 by the compression coil spring 89.

A working chamber 133 is defined between the boss portion 162 and the pressure plate 161. The working chamber 133 is filled with oil. As the hydraulic pressure in the working chamber 133 increases, the pressure plate 161 displaces in a direction to separate from the boss portion 162. Thus, a distance between the pressure plate 161 and the inner 67 is shortened. Accordingly, the group of plates 132 is brought into a pressure contact state. As a result, the inner 67 and the outer 68 rotate together, and the fourth clutch 66 becomes an engaged state.

On the other hand, as the pressure in the working chamber 133 decreases, the pressure plate 161 displaces toward the boss portion 162 by the compression coil spring 89. Thus, the group of plates 132 is released from the pressure contact state. As a result, the inner 67 and the outer 68 can rotate relative to each other, and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141 is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the transmission cover 50 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143, and passes on the crank case 32 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 18, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. An ECU 138 shown in FIG. 18 controls the actuator 103 that regulates the hydraulic pressures of the third clutch 70 and the fourth clutch 66. More specifically, the hydraulic pressures in the working chamber 133 and the working chamber 137 are regulated. Thus, the third clutch 70 and the fourth clutch 66 are engaged/disengaged.

To be more specific, as shown in FIG 18, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a substantially cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

Next, the operation of the transmission 31 will be described in detail with reference to FIG. 9 to FIG. 12.

### - First speed when starting from standstill -

First, when the engine 30 is started, the crank shaft 34 (ie, the input shaft 52) starts to rotate. The inner 56 of the first clutch 55 rotates together with the input shaft 52. Therefore, when the rotation speed of the input shaft 52 becomes equal to or higher than a predetermined rotation speed (ie, the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The fifth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the moped 2 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

In the first speed, the fourth gear 65 common with the fifth gear 87 rotates together with the first rotation shaft 53. Therefore, the third gear 62 meshing with the fourth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged, as shown in FIG. 10.

Note that, in this embodiment, the gear ratio of the second pair of shift gears 83 is smaller than the gear ratio of the first pair of shift gears 86. As a result, the rotation speed of the fourth gear 65 is higher than the rotation speed of the second gear 63. Accordingly, rotation is transmitted from the input shaft 52 to the first rotation shaft 53 via the second pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the second pair of shift gears 83, the first pair of transmission gears 84, the second pair of transmission gears 85, and the third pair of transmission gears 98, as shown in FIG 10.

### - Third speed -

In the second speed, when the rotation speed of the crank shaft 34 (ie, the input shaft 52) becomes higher than the second rotation speed, and the vehicle speed becomes equal to or higher than a predetermined vehicle speed, the valve 143 is driven and the third clutch 70 is engaged, as shown in FIG. 11. As a result, the third pair of shift gears 91 starts to rotate. Note that the gear ratio of the third pair of shift gears 91 is smaller than the gear ratio of the second pair of transmission gears 85. Therefore, the rotation speed of the tenth gear 77 of the third pair of shift gears 91 becomes higher than the rotation speed of the eighth gear 78 of the second pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the second pair of shift gears 83, the first pair of transmission gears 84, the third clutch 70, the third pair of shift gears 91, and the third pair of transmission gears 98, as shown in FIG. 11.

### - Fourth speed -

In the third speed, when the rotation speed of the crank shaft 34 (ie, the input shaft 52) further increases and the vehicle speed further increases as well, the valve 143 is driven and the fourth clutch 66 is engaged, as shown in FIG. 12. On the other hand, the third clutch 70 is disengaged. As a result, the fourth pair of shift gears 90 starts to rotate. Note that the gear ratio of the fourth pair of shift gears 90 is also smaller than the gear ratio of the second pair of transmission gears 85. Therefore, the rotation speed of the twelfth gear 76 of the fourth pair of shift gears 90 becomes higher than the rotation speed of the eighth gear 78 of the second pair of transmission gears 85. Thus, the rotation of the second rotation shaft 54 is transmitted to the third rotation shaft 64 via the fourth pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

In this manner, in the fourth speed, rotation is transmitted from the input shaft 52 to the output shaft 33 via the second clutch 59, the second pair of shift gears 83, the first pair of transmission gears 84, the fourth clutch 66, the fourth pair of shift gears 90, and the third pair of transmission gears 98, as shown in FIG. 12.

### (Operation and effects)

As described above, this embodiment adopts the gear train transmission 31. Accordingly, energy transmission loss is small compared to, for example, a continuously variable transmission using a V-belt. As a result, fuel economy of the vehicle can be improved.

As described above, in this embodiment, shift is performed between the input shaft 52 and the first rotation shaft 53, and between the second rotation shaft 54 and the third rotation shaft 64. More specifically, the first pair of shift gears 86 and the second pair of shift gears 83 are provided between the input shaft 52 and the first rotation shaft 53. The third pair of shift gears 91 and the fourth pair of shift gears 90 are provided between the second rotation shaft 54 and the third rotation shaft 64. Therefore, as compared to using a change gear mechanism provided on a single rotation shaft, like a transmission using a planetary gear, the structure of the transmission 31 can be simplified. In addition, the transmission 31 can be made compact.

Further, in this embodiment, the fourth gear 65 of the second pair of shift gears 83 and the fifth gear 87 of the first pair of transmission gears 84 are common. Thus, the transmission 31 can be made more compact.

Further, as described above, in this embodiment, power transmission between the input shaft 52 and the output shaft 33 is performed by a gear train method, by utilizing the first rotation shaft 53 and the third rotation 64 that are provided for speed change. Accordingly, there is no need to provide an additional power transmission means, such as a chain. Moreover, unlike the case where, for example, a chain is provided, there is no need to additionally provide a member that prevents flapping of the chain, such as a chain guide, a chain tensioner. Accordingly, the structure of the transmission 31 can be made particularly simple. In addition, the transmission 31 can be made particularly compact.

In this embodiment, the transmission 31 has four speeds. Therefore, compared to a three-speed transmission, the number of speeds is relatively large for a speed range over which the vehicle is used. Accordingly, comfortable automatic shift can be easily achieved.

In this embodiment, the input shaft 52, the first rotation shaft 53, the second rotation shaft 54, the third rotation shaft 64, and the output shaft 33 are arranged in a direction orthogonal to the axial direction of the input shaft 52 (i.e., in the front-rear direction). Therefore, the transmission 31 can be made compact in the axial direction of the input shaft 52. As a result, the width of the moped 2 in the vehicle width direction can be reduced. Therefore, the bank angle of the moped 2 can be made relatively large.

Particularly in this embodiment, the group of clutches 81 on the upstream side and the group of clutches 82 on the downstream side are disposed so that they at least partially overlap in the axial direction of the input shaft 52. Accordingly, compared to when the group of clutches 81 on the upstream side and the group of clutches 82 on the downstream side do not overlap in the axial direction of the input shaft 52, the width of the transmission 31 in the axial direction of the input shaft 52 can be made smaller. As a result, the width of the moped 2 in the vehicle width direction can be made smaller. In order to further reduce the width of the moped 2 in the vehicle width direction, it is preferable that the group of clutches 81 on the upstream side and the group of clutches 82 on the downstream side substantially overlap in the axial direction of the input shaft 52.

In this embodiment, the first clutch 55 and the fourth clutch 66 are disposed so that they at least partially overlap with each other in the vehicle width direction, and the second clutch 59 and the third clutch 70 are disposed so that they at least partially overlap in the vehicle width direction. Accordingly, the width of the transmission 31 in the axial direction of the input shaft 52 can be made smaller. In order to further reduce the width of the transmission 31 in the axial direction of the input shaft 52, it is preferable that the first clutch 55 and the fourth clutch 66 are disposed so that they substantially overlap in the vehicle width direction, and that the second clutch 59 and the third clutch 70 are disposed so that they substantially overlap in the vehicle width direction.

Further, in this embodiment, the first pair of shift gears 86 and the fourth pair of shift gears 90 are disposed so that they at least partially overlap with each other in the axial direction of the input shaft 52. The second pair of shift gears 83 and the third pair of shift gears 91 are disposed so that they at least partially overlap with each other. Accordingly, the width of the transmission 31 in the axial direction of the input shaft 52 can be made particularly small.

For example, it is also conceivable that the first pair of shift gears 86 is disposed on the right side of the first clutch 55, and the fourth pair of shift gears 90 is disposed on the left side of the fourth clutch 66. Further, it is also conceivable that the second pair of shift gears 83 is disposed on the left side of the second clutch 59, and the third pair of shift gears 91 is disposed on the right side of the third clutch 70. That is, it is also conceivable that, with respect to the first clutch 55 and the fourth clutch 66 that are arranged in the front-rear direction, the first pair of shift gears 86 and the fourth pair of shift gears 90 are disposed in mutually opposite directions. It is also conceivable that, with respect to the second clutch 59 and the third clutch 70 that are arranged in the front-rear direction, the second pair of shift gears 83 and the third pair of shift gears 91 are disposed in mutually opposite directions. However, in such dispositions, the width of the transmission 31 in the vehicle width direction becomes relatively large.

On the other hand, as in this embodiment, if the fourth pair of shift gears 90 is located with respect to the fourth clutch 66 on the same side on which the first pair of shift gears 86 is located with respect to the first clutch 55, and the third pair of shift gears 91 is located with respect to the third clutch 70 on the same side on which the second pair of shift gears 83 is located with respect to the second clutch 59, the width of the transmission 31 in the vehicle width direction can be reduced. In other words, the width of the transmission 31 in the vehicle width direction can be reduced by disposing the first pair of shift gears 86 and the fourth pair of shift gears 90 on the same side with respect to the first clutch 55 and the fourth clutch 66 that are arranged in the front-rear direction, and by disposing the second pair of shift gears 83 and the third pair of shift gears 91 on the same side with respect to the second clutch 59 and the third clutch 70 that are arranged in the front-rear direction.

In order to further reduce the width of the transmission 31 in the vehicle width direction, it is preferable to dispose the plurality of clutches arranged on the same rotation shaft to be adjacent to each other. More specifically, it is preferable that the first clutch 55 and the second clutch 59 are disposed between the first pair of shift gears 86 and the second pair of shift gears 83, as in this embodiment. It is preferable that the third clutch 70 and the fourth clutch 66 are disposed between the third pair of shift gears 91 and the fourth pair of shift gears 90.

For example, the third clutch 70 and the fourth clutch 66 may be centrifugal clutches. In this case, for example, if the third clutch 70, rather than the fourth clutch 66, is engaged/disengaged when the rotation speed of the second rotation shaft 54 is low, the third clutch 70 cannot be disengaged while the fourth clutch 66 is engaged. Therefore, in order to transmit power between the second rotation shaft 54 and the third rotation shaft 64 using the fourth pair of shift gears 90 in a state where both the third clutch 70 and the fourth clutch 66 are engaged, a one-way clutch and a one-way gear are required to be provided. Accordingly, the structure of the transmission 31 tends to be complicated. On the other hand, in this embodiment, the third clutch 70 and the fourth clutch 66 are hydraulic clutches. Therefore, the third clutch 70 and the fourth clutch 66 can be freely engaged/disengaged. As a result, there is no need to additionally provide a one-way clutch and a one-way gear. Thus, the structure of the transmission 31 can be more simplified.

### «First modified example»

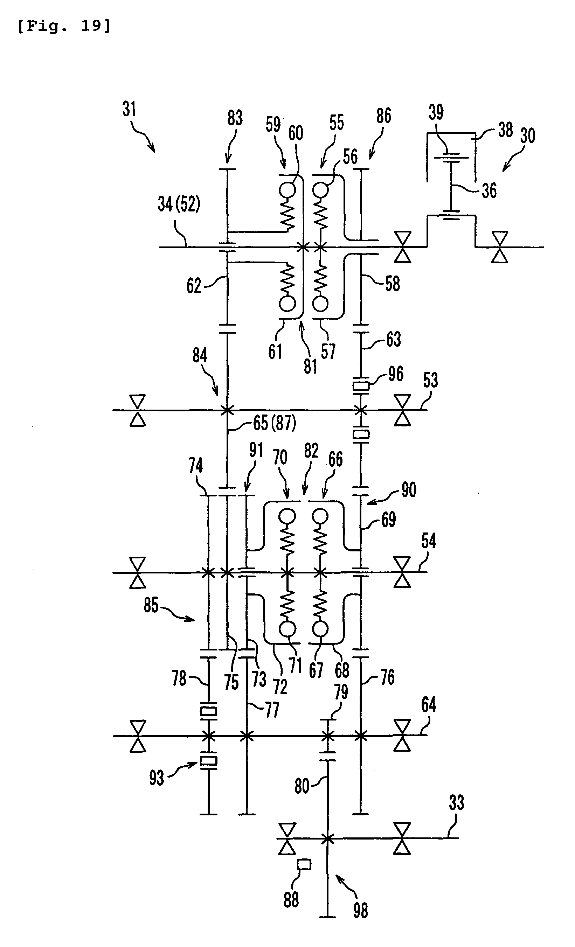

In the above-described embodiments, an example is explained in which the outer 57 of the first clutch 55 and the outer 61 of the second clutch 59 are formed by the same member. However, the invention is not limited to this structure. For example, as shown in FIG. 19, the outer 57 of the first clutch 55 and the outer 61 of the second clutch 59 may be provided separately.

### «Second modified example»

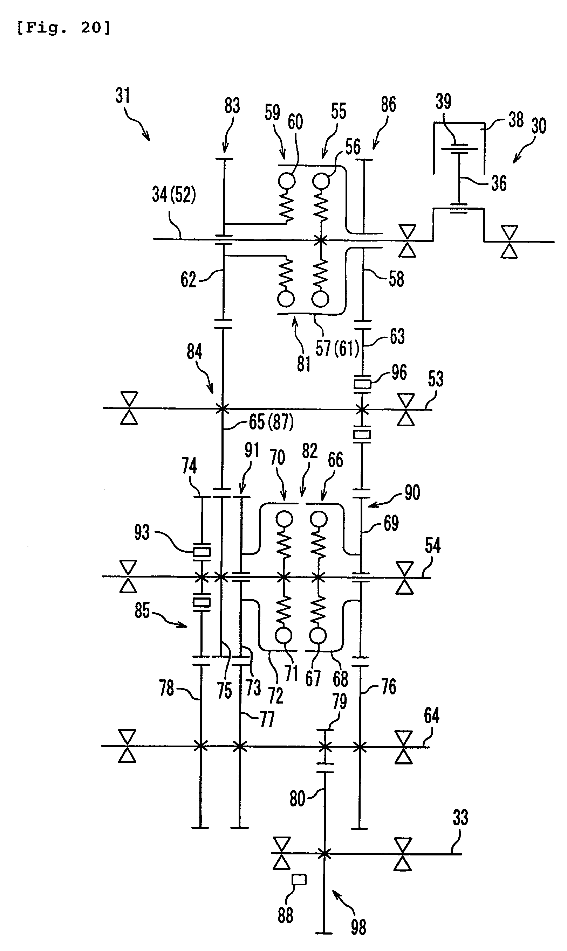

In the above-described embodiments, an example is explained in which the one-way rotation transmission mechanism 93 is provided for the eighth gear 78. However, the invention is not limited to this structure. For example, as shown in FIG. 20, the one-way rotation transmission mechanism 93 may be provided for the seventh gear 74.

### «Third modified example»

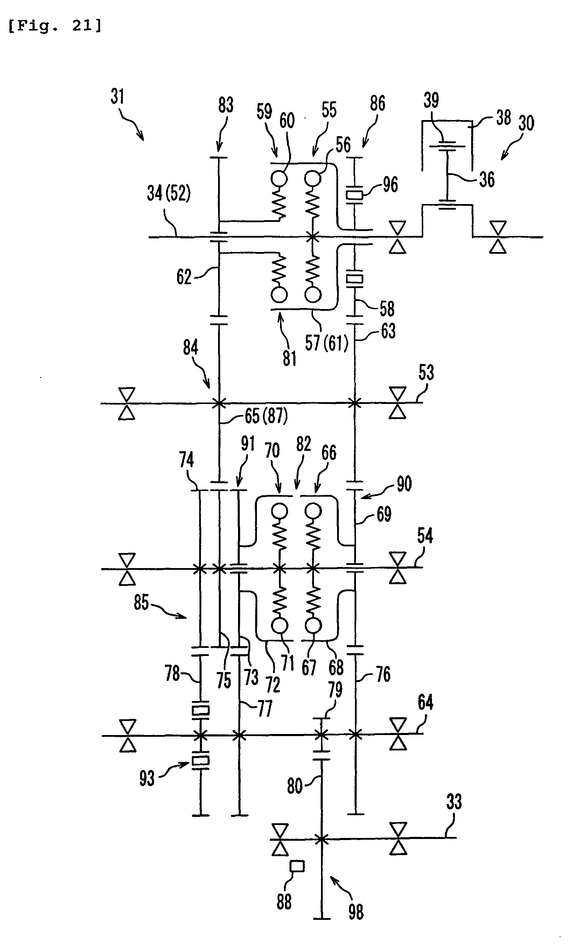

In the above-described embodiments, an example is explained in which the one-way rotation transmission mechanism 96 is provided for the second gear 63. However, the invention is not limited to this structure. For example, as shown in FIG. 21, the one-way rotation transmission mechanism 96 may be provided for the first gear 58.

### «Fourth modified example»

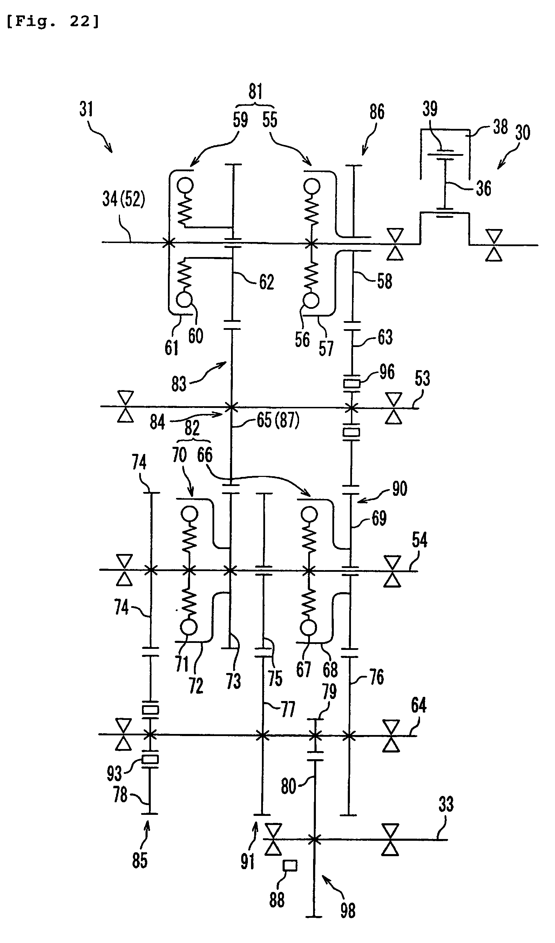

In the above-described embodiments, an example is explained in which the first clutch 55 and the second clutch 59 are disposed between the first pair of shift gears 86 and the second pair of shift gears 83. However, the invention is not limited to this structure. For example, as shown in FIG 22, the first clutch 55 may be disposed on the left side of the first pair of shift gears 86, and the second clutch 59 may be disposed on the left side of the second pair of shift gears 83.

In a similar manner, in the above-described embodiments, an example is explained in which the third clutch 70 and the fourth clutch 66 are disposed between the third pair of shift gears 91 and the fourth pair of shift gears 90. However, the invention is not limited to this structure. For example, as shown in FIG 22, the third clutch 70 may be disposed on the left side of the third pair of shift gears 91, and the fourth clutch 66 may be disposed on the left side of the fourth pair of shift gears 90.

Also in the case shown in FIG. 22, the input shaft 52, the first rotation shaft 53, the second rotation shaft 54, the third rotation shaft 64, and the output shaft 33 are arranged in the front-rear direction. Accordingly, the transmission 31 having a relatively narrow width can be realized.

### «Other modified examples»

In the above-described embodiments, an example is explained in which the engine 30 is a single cylinder engine. However, in the invention, the engine 30 is not limited to a single cylinder engine. The engine 30 may be, for example, a multi-cylinder engine such as a two cylinder engine.

In the above-described embodiments, an example is explained in which the output shaft 33 and the third rotation shaft 64 are separately provided. However, the invention is not limited to this structure. The output shaft 33 and the third rotation shaft 64 may be common. In other words, the rear wheel 18 may be attached to the third rotation shaft 64.

In the embodiments, the first clutch 55 and the second clutch 59 are drum type centrifugal clutches. However, the invention is not limited to this structure. The first clutch 55 and the second clutch 59 may be clutches other than centrifugal clutches. For example, the first clutch 55 and the second clutch 59 may be hydraulic clutches.

In the above-described embodiments, an example is explained in which the first clutch 55 and the second clutch 59 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, the first clutch 55, the second clutch 59, the fourth clutch 66, and the third clutch 70 may be drum type or disc type centrifugal clutches. Alternatively, they may be drum type or disc type hydraulic clutches. All of the first clutch 55, the second clutch 59, the fourth clutch 66, and the third clutch 70 may be centrifugal clutches. All of the first clutch 55, the second clutch 59, the fourth clutch 66, and the third clutch 70 may be hydraulic clutches. Further, from among the first clutch 55, the second clutch 59, the fourth clutch 66, and the third clutch 70, one or more clutches having a relatively large gear ratio may be a centrifugal clutch, and the other one or more clutches having a relatively small gear ratio may be a hydraulic clutch. For example, only the first clutch 55 may be a centrifugal clutch, and the other clutches 59, 66, and 70 may be hydraulic clutches. Contrarily, from among the first clutch 55, the second clutch 59, the fourth clutch 66, and the third clutch 70, one or more clutches having a relatively large gear ratio may be a hydraulic clutch, and the other one or more clutches having a relatively small gear ratio may be a centrifugal clutch.

Note that, in the above-described first and second embodiments and respective modified examples, an example is explained in which the pairs of gears mesh directly with each other. However, the invention is not limited to this structure. The pairs of gears may be mesh indirectly via a separately provided gear.

In the above-described second embodiment, as shown in FIG 15, an example is explained in which the first rotation shaft 53 may be disposed such that the axis C2 of the first rotation shaft 53 is located at a position that is higher than the axis C4 of the third rotation shaft 64. However, the invention is not limited to this structure. For example, the first rotation shaft 53 may be disposed such that the axis C2 of the first rotation shaft 53 is located at a position that is lower than the axis C4 of the third rotation shaft 64. More specifically, the first rotation shaft 53 may be disposed such that the axis C2 of the first rotation shaft 53 is located below the plane P. The third rotation shaft 64 may be disposed such that the axis C4 of the third rotation shaft 64 is located above the plane P.

In the above-described embodiments, the four-speed transmission 31 is used as an example to explain the preferred embodiment of the invention. However, the invention is not limited to this structure. For example, the transmission 31 may be a transmission with five or more speeds. In this case, it is conceivable that two additional rotation shafts are provided between the third rotation shaft 64 and the output shaft 33, and an additional clutch and an additional pair of shift gears are provided on the two rotation shafts.

### «Definition of terms in the specification»

In the specification, the "motorcycle" is not limited to a motorcycle defined in a narrow sense. The term "motorcycle" indicates a motorcycle defined in a broad sense. More specifically, in the specification, the term "motorcycle" indicates any vehicle that changes direction by banking the vehicle. Accordingly, the "motorcycle" is not limited to a two-wheeled motor vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

### «Fifth modified example»

In the above-described first embodiment, an example is explained in which three rotation shafts are disposed between the input shaft 52 and the output shaft 33 as shown in FIG. 2. Furthermore, in the example illustrated in the first embodiment, the axis C1 of the input shaft 52, the axes C2 to C4 of the first to third rotation shafts 53, 54 and 64, and the axis C5 of the output shaft 33 are arranged in a generally straight line in a side view as shown in FIG. 5. However, the invention is not limited to this structure. At least four rotation shafts may be disposed between the input shaft 52 and the output shaft 33. Furthermore, the axes of the respective rotation shafts disposed between the input shaft 52 and the output shaft 33 may not be arranged in a straight line passing the axis C1 of the input shaft 52 and the axis C5 of the output shaft 33 in a side view.

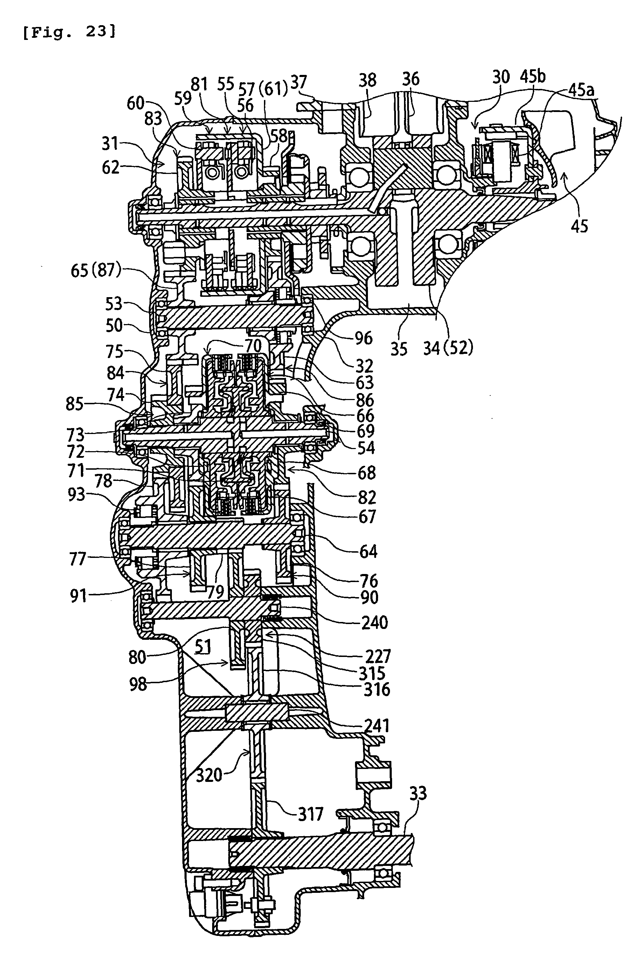

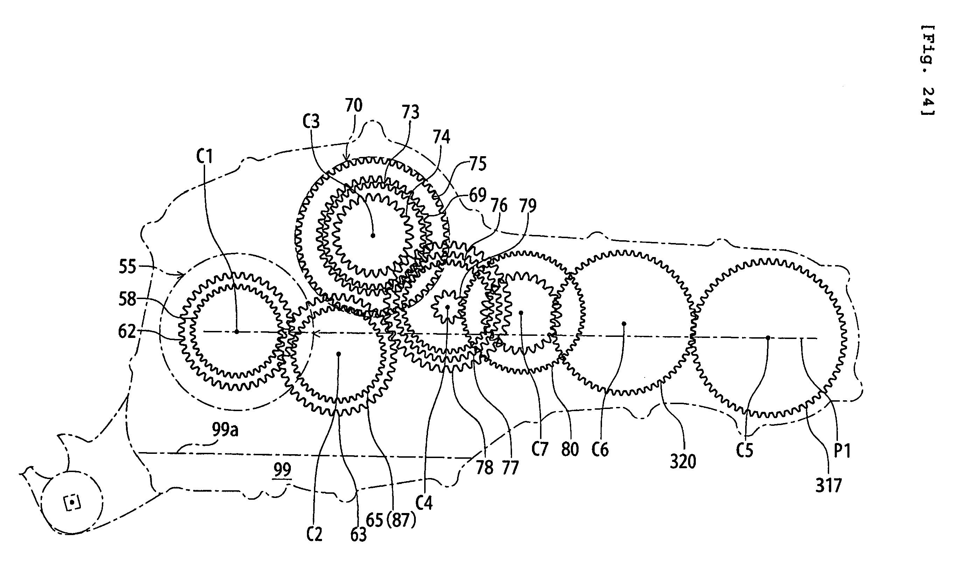

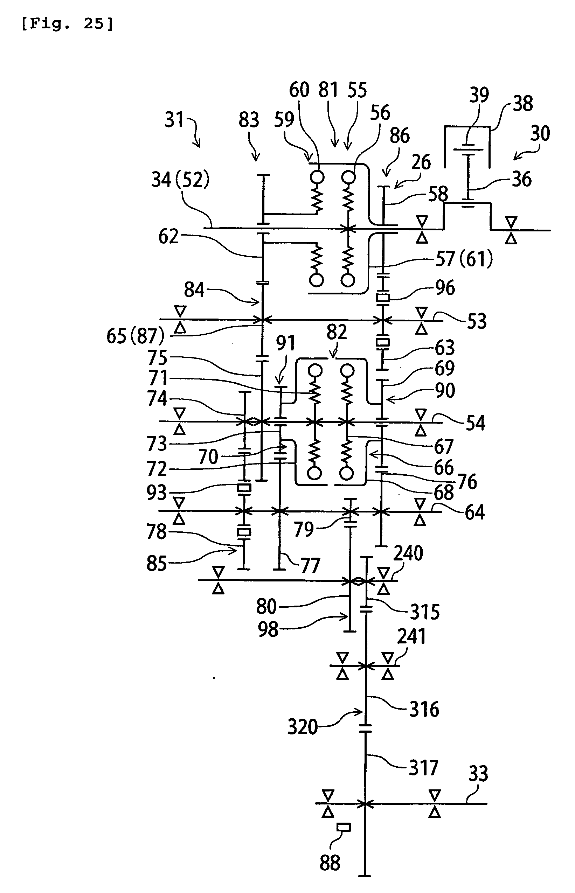

FIG. 23 is a cross sectional view of an engine unit according to a fifth modified example. FIG. 24 is a schematic partial cross sectional view illustrating the arrangement of rotation shafts of the engine unit according to the fifth modified example. FIG 25 is a schematic diagram showing the structure of the engine unit according to the fifth modified example.

As shown in FIGS. 23 and 25, in the fifth modified example, a fourth rotation shaft 240 and a fifth rotation shaft 241 are disposed between the third rotation shaft 64 and the output shaft 33. A fourteenth gear 80 is attached to the fourth rotation shaft 240 such that it cannot rotate with respect to the fourth rotation shaft 240.

Furthermore, a fifteenth gear 315 is attached to the fourth rotation shaft 240 such that it cannot rotate with respect to the fourth rotation shaft 240. The fifteenth gear 315 meshes with a seventeenth gear 317 which is attached to the output shaft 33 such that it cannot rotate with respect to the output shaft 33, via a sixteenth gear 316 which is rotatably attached to the fifth rotation shaft 241. The fifteenth gear 315, the sixteenth gear 316, and the seventeenth gear 317 form a pair of fourth transmission gears 320. Rotation of the fourth rotation shaft 240 is transmitted to the output shaft 33 by the pair of fourth transmission gears 320.

As shown in FIG. 24, the axis C2 of the first rotation shaft 53 is located to the rear of the axis C1 of the input shaft 52. Furthermore, the axis C2 of the first rotation shaft 53 is located below the axis C1 of the input shaft 52. The axis C2 of the first rotation shaft 53 is located slightly below the plane P including the axis C1 of the input shaft 52 and the axis C5 of the output shaft 33.

The axis C3 of the second rotation shaft 54 is located to the rear of each of the axis C1 of the input shaft 52 and the axis C2 of the first rotation shaft 53. Furthermore, the axis C3 of the second rotation shaft 54 is located above each of the axis C1 of the input shaft 52 and the axis C2 of the first rotation shaft 53. The axis C3 of the second rotation shaft 54 is located above the plane P.

The axis C4 of the third rotation shaft 64 is located to the rear of each of the axis C1 of the input shaft 52, the axis C2 of the first rotation shaft 53 and the axis C3 of the second rotation shaft 54. The axis C4 of the third rotation shaft 64 is located slightly above each of the axis C1 of the input shaft 52 and the axis C2 of the first rotation shaft 53. The axis C4 of the third rotation shaft 64 is located below the axis C3 of the second rotation shaft 54. The axis C4 of the third rotation shaft 64 is located above the plane P.

The axis C7 of the fourth rotation shaft 240 is located to the rear of each of the axis C1 of the input shaft 52, the axis C2 of the first rotation shaft 53, the axis C3 of the second rotation shaft 54 and the axis C4 of the third rotation shaft 64. The axis C7 of the fourth rotation shaft 240 is located slightly above each of the axis C1 of the input shaft 52 and the axis C2 of the first rotation shaft 53. The axis C7 of the fourth rotation shaft 240 is located below the axis C3 of the second rotation shaft 54. The axis C7 of the fourth rotation shaft 240 is located at a height substantially the same as the axis C4 of the third rotation shaft 64. The axis C7 of the fourth rotation shaft 240 is located above the plane P.

The axis C6 of the fifth rotation shaft 241 is located to the rear of each of the axis C1 of the input shaft 52, the axis C2 of the first rotation shaft 53, the axis C3 of the second rotation shaft 54, the axis C4 of the third rotation shaft 64 and the axis C7 of the fourth rotation shaft 240. The axis C6 of the fifth rotation shaft 241 is located slightly above each of the axis C1 of the input shaft 52 and the axis C2 of the first rotation shaft 53. The axis C6 of the fifth rotation shaft 241 is located below the axis C3 of the second rotation shaft 54, the axis C4 of the third rotation shaft 64 and the axis C7 of the fourth rotation shaft 240. The axis C6 of the fifth rotation shaft 241 is located above the plane P.

Furthermore, an oil reservoir 99 is formed below the input shaft 52, the first rotation shaft 53, the third rotation shaft 64 and the fourth rotation shaft 240. In the embodiment, the oil reservoir 99 is formed to the front of the axis C7 of the fourth rotation shaft 240. The oil reservoir 99 is not formed below the axis C7 of the fourth rotation shaft 240 and the axis C6 of the fifth rotation shaft 241.

The first and second rotation shafts 53 and 54 are located in a higher position than the oil reservoir 99 when a two-wheeled motor vehicle 3 is in a stopped state. Furthermore, in this embodiment, the gears 63, 65, 69, 73, 75 and 74 provided on the first and second rotation shafts 53 and 54 are located in a higher position than the oil reservoir 99 when the two-wheeled motor vehicle 3 is in a stopped state.

### [Industrial Applicability]

The invention is applicable to a stepped automatic transmission and a motorcycle.

## Claims

1. A stepped automatic transmission with four or more speeds including an input shaft (52) and an output shaft (33), the stepped automatic transmission comprising:
a first rotation shaft (53), a second rotation shaft (54), and a third rotation shaft (64) that is connected to the output shaft (33) or that forms the output shaft (33), which are respectively arranged in a direction orthogonal to an axial direction of the input shaft (52);
a first clutch (55) including an input side clutch member (56) that rotates together with the input shaft (52), and an output side clutch member (57) that is capable of rotating with respect to the input shaft (52);
a first pair of shift gears (86) including a first gear (58) that rotates together with the output side clutch member (57) of the first clutch (55), and a second gear (63) that meshes with the first gear (58) and rotates together with the first rotation shaft (53);
a second clutch (59) including an input side clutch member (61) that rotates together with the input shaft (52), and an output side clutch member (60) that is capable of rotating with respect to the input shaft (52), the second clutch (59) forming with the first clutch (55) a group (81) of clutches on an upstream side, and being engaged at a rotation speed of the input shaft (52) that is different from that at which the first clutch (55) is engaged;
a second pair of shift gears (83) including a third gear (62) that rotates together with the output side clutch member (60) of the second clutch (59), and a fourth gear (65) that meshes with the third gear (62) and rotates together with the first rotation shaft (53), the second pair of shift gears (83) having a gear ratio different from that of the first pair of shift gears (86);
a first pair of transmission gears (84) including a fifth gear (87) that rotates together with the first rotation shaft (53), and a sixth gear (75) that meshes with the fifth gear (87) and rotates together with the second rotation shaft (54);
a second pair of transmission gears (85) including a seventh gear (74) that rotates together with the second rotation shaft (54), and an eighth gear (78) that meshes with the seventh gear (74) and rotates together with the third rotation shaft (64);
a first one-way rotation transmission mechanism, disposed between the second rotation shaft (54) and the seventh gear (74), that transmits rotation of the second rotation shaft (54) to the seventh gear (74) and does not transmit rotation of the seventh gear (74) to the second rotation shaft (54), or a second one-way rotation transmission mechanism (93), disposed between the third rotation shaft (64) and the eighth gear (78), that transmits rotation of the eighth gear (78) to the third rotation shaft (64) and does not transmit rotation of the third rotation shaft (64) to the eighth gear (78);
a third one-way rotation transmission mechanism (96), disposed between the second gear (63) and the first rotation shaft (53), that transmits rotation of the second gear (63) to the first rotation shaft (53) and does not transmit rotation of the first rotation shaft (53) to the second gear (63), or a fourth one-way rotation transmission mechanism, disposed between the input shaft (52) and the first gear (58), that transmits rotation of the input shaft (52) to the first gear (58) and does not transmit rotation of the first gear (58) to the input shaft (52);
a third clutch (70) including an input side clutch member (71) that rotates together with the second rotation shaft (54), and an output side clutch member (72) that is capable of rotating with respect to the second rotation shaft (54);
a third pair of shift gears (91) including a ninth gear (73) that rotates together with the output side clutch member (72) of the third clutch (70), and a tenth gear (77) that meshes with the ninth gear (73) and rotates together with the third rotation shaft (64), the third pair of shift gears (91) having a gear ratio different from the gear ratios of the first pair of shift gears (86) and the second pair of shift gears (83);
a fourth clutch (66) including an input side clutch member (67) that rotates together with the second rotation shaft (54), and an output side clutch member (68) that is capable of rotating with respect to the second rotation shaft (54), the fourth clutch (66) forming with the third clutch (70) a group (82) of clutches on a downstream side, and being engaged at a rotation speed of the second rotation shaft (54) that is different from that at which the third clutch (70) is engaged; and
a fourth pair of shift gears (90) including an eleventh gear (69) that rotates together with the output side clutch member (68) of the fourth clutch (66), and a twelfth gear (76) that meshes with the eleventh gear (69) and rotates together with the third rotation shaft (64), the fourth pair of shift gears (90) having a gear ratio different from the gear ratios of the first pair of shift gears (86), the second pair of shift gears (83) and the third pair of shift gears (91), wherein
the group (81) of clutches on the upstream side and the group (82) of clutches on the downstream side are disposed so as to at least partially overlap in the axial direction of the input shaft (52).

2. The stepped automatic transmission according to claim 1, wherein
the first clutch (55) is located on one side of the second clutch (59), and the fourth clutch (66) is located on one side of the third clutch (70), and
the first clutch (55) and the fourth clutch (66) are disposed so as to at least partially overlap in the axial direction of the input shaft (52), and the second clutch (59) and the third clutch (70) are disposed so as to at least partially overlap in the axial direction of the input shaft (52).

3. The stepped automatic transmission according to claim 1 or 2, wherein
the fourth pair of shift gears (90) is located with respect to the fourth clutch (66) on the same side on which the first pair of shift gears (86) is located with respect to the first clutch (55), and
the third pair of shift gears (91) is located with respect to the third clutch (70) on the same side on which the second pair of shift gears (83) is located with respect to the second clutch (59).

4. The stepped automatic transmission according to claim 3, wherein
the first clutch (55) and the second clutch (59) are located between the first pair of shift gears (86) and the second pair of shift gears (83), and
the third clutch (70) and the fourth clutch (66) are located between the third pair of shift gears (91) and the fourth pair of shift gears (90).

5. The stepped automatic transmission according to claim 3 or 4, wherein
the first pair of shift gears (86) and the fourth pair of shift gears (90) are disposed so as to at least partially overlap with each other in the axial direction of the input shaft (52), and the second pair of shift gears (83) and the third pair of shift gears (91) are disposed so as to at least partially overlap with each other in the axial direction of the input shaft (52).

6. The stepped automatic transmission according to any one of claims 1 to 5, wherein
the second pair of shift gears (83) has a gear ratio that is smaller than that of the first pair of shift gears (86),
the first clutch (55) is engaged when the rotation speed of the input shaft (52) is equal to or higher than a first rotation speed, and is disengaged when the rotation speed of the input shaft (52) is lower than the first rotation speed,
the second clutch (59) is engaged when the rotation speed of the input shaft (52) is equal to or higher than a second rotation speed that is higher than the first rotation speed, and is disengaged when the rotation speed of the input shaft (52) is lower than the second rotation speed, and
the fourth gear (65) and the fifth gear (87) are common.

7. The stepped automatic transmission according to any one of claims 1 to 6, wherein
the third clutch (70) and the fourth clutch (66) are hydraulic clutches that are engaged/disengaged by hydraulic pressure, and
when one of the third clutch (70) and the fourth clutch (66) is engaged, the other clutch is disengaged.

8. A motorcycle comprising the stepped automatic transmission (31) according to any one of claims 1 to 7.

## Patentansprüche

1. Ein Stufenautomatikgetriebe mit vier oder mehr Geschwindigkeiten, das eine Eingangswelle (52) und eine Ausgangswelle (33) umfasst, wobei das Stufenautomatikgetriebe folgende Merkmale aufweist:
eine erste Drehwelle (53), eine zweite Drehwelle (54) und eine dritte Drehwelle (64), die mit der Ausgangswelle (33) verbunden ist oder die die Ausgangswelle (33) bildet, die jeweils in einer Richtung orthogonal zu einer Axialrichtung der Eingangswelle (52) angeordnet sind;
eine erste Kupplung (55), die ein Eingangsseitenkupplungsbauglied (56) umfasst, das sich zusammen mit der Eingangswelle (52) dreht, und ein Ausgangsseitenkupplungsbauglied (57), das sich bezüglich der Eingangswelle (52) drehen kann;
ein erstes Paar von Schiebezahnrädern (86), das ein erstes Zahnrad (58) umfasst, das sich zusammen mit dem Ausgangsseitenkupplungsbauglied (57) der ersten Kupplung (55) dreht, und ein zweites Zahnrad (63), das mit dem ersten Zahnrad (58) ineinandergreift und sich zusammen mit der ersten Drehwelle (53) dreht;
eine zweite Kupplung (59), die ein Eingangsseitenkupplungsbauglied (61) umfasst, das sich zusammen mit der Eingangswelle (52) dreht, und ein Ausgangsseitenkupplungsbauglied (60), das sich bezüglich der Eingangswelle (52) drehen kann, wobei die zweite Kupplung (59) mit der ersten Kupplung (55) eine Gruppe (81) von Kupplungen auf einer vorgeschalteten Seite bildet und bei einer Drehgeschwindigkeit der Eingangswelle (52) in Eingriff genommen ist, die sich von derjenigen unterscheidet, bei der die erste Kupplung (55) in Eingriff genommen ist;
ein zweites Paar von Schiebezahnrädern (83), das ein drittes Zahnrad (62) umfasst, das sich zusammen mit dem Ausgangsseitenkupplungsbauglied (60) der zweiten Kupplung (59) dreht, und ein viertes Zahnrad (65), das mit dem dritten Zahnrad (62) ineinandergreift und sich zusammen mit der ersten Drehwelle (53) dreht, wobei das zweite Paar von Schlebezahnrädern (83) ein Übersetzungsverhältnis aufweist, das sich von demjenigen des ersten Paars von Schiebezahnrädern (86) unterscheidet;
ein erstes Paar von Übertragungszahnrädern (84), das ein fünftes Zahnrad (87) umfasst, das sich zusammen mit der ersten Drehwelle (53) dreht, und ein sechstes Zahnrad (75), das mit dem fünften Zahnrad (87) ineinandergreift und sich zusammen mit der zweiten Drehwelle (54) dreht;
ein zweites Paar von Übertragungszahnrädern (85), das ein siebtes Zahnrad (74) umfasst, das sich zusammen mit der zweiten Drehwelle (54) dreht, und ein achtes Zahnrad (78), das mit dem siebten Zahnrad (74) ineinandergreift und sich zusammen mit der dritten Drehwelle (64) dreht;
einen ersten Einwegdrehübertragungsmechanismus, der zwischen der zweiten Drehwelle (54) und dem siebten Zahnrad (74) angeordnet ist, der eine Drehung der zweiten Drehwelle (54) des siebten Zahnrads (74) überträgt und eine Drehung des siebten Zahnrads (74) nicht zu der zweiten Drehwelle (54) überträgt, oder einen zweiten Einwegdrehübertragungsmechanismus (93), der zwischen der dritten Drehwelle (64) und dem achten Zahnrad (78) angeordnet ist, der eine Drehung des achten Zahnrads (78) zu der dritten Drehwelle (64) überträgt und eine Drehung der dritten Drehwelle (64) nicht zu dem achten Zahnrad (78) überträgt;
einen dritten Einwegdrehübertragungsmechanismus (96), der zwischen dem zweiten Zahnrad (63) und der ersten Drehwelle (53) angeordnet ist, der eine Drehung des zweiten Zahnrads (63) zu der ersten Drehwelle (53) überträgt und eine Drehung der ersten Drehwelle (53) nicht zu dem zweiten Zahnrad (63) überträgt, oder einen vierten Einwegdrehübertragungsmechanismus, der zwischen der Eingangswelle (52) und
dem ersten Zahnrad (58) angeordnet ist, der eine Drehung der Eingangswelle (52) zu dem ersten Zahnrad (58) überträgt und eine Drehung des ersten Zahnrads (58) nicht zu der Eingangswelle (52) überträgt;
eine dritte Kupplung (70), die ein Eingangsseitenkupplungsbauglied (71) umfasst, das sich zusammen mit der zweiten Drehwelle (54) dreht, und ein Ausgangsseitenkupplungsbauglied (72), das sich bezüglich der zweiten Drehwelle (54) drehen kann;
ein drittes Paar von Schiebezahnrädern (91), das ein neuntes Zahnrad (73) umfasst, das sich zusammen mit dem Ausgangsseitenkupplungsbauglied (72) der dritten Kupplung (70) dreht, und ein zehntes Zahnrad (77), das mit dem neunten Zahnrad (73) ineinandergreift und sich zusammen mit der dritten Drehwelle (64) dreht, wobei das dritte Paar von Schiebezahnrädern (91) ein Übersetzungsverhältnis aufweist, das sich von den Übersetzungsverhältnissen des ersten Paars von Schiebezahnrädern (86) und des zweiten Paars von Schiebezahnrädern (83) unterscheidet;
eine vierte Kupplung (66), die ein Eingangsseitenkupplungsbauglied (67) umfasst, das sich zusammen mit der zweiten Drehwelle (54) dreht, und ein Ausgangsseitenkupplungsbauglied (68), das sich bezüglich der zweiten Drehwelle (54) drehen kann, wobei die vierte Kupplung (66) mit der dritten Kupplung (70) eine Gruppe (82) von Kupplungen auf einer nachgeschalteten Seite bildet, und bei einer Drehgeschwindigkeit der zweiten Drehwelle (54) in Eingriff genommen ist, die sich von derjenigen unterscheidet, bei der die dritte Kupplung (70) in Eingriff genommen ist; und
ein viertes Paar von Schiebezahnrädern (90), das ein elftes Zahnrad (69) umfasst, das sich zusammen mit dem Ausgangsseitenkupplungsbauglied (68) der vierten Kupplung (66) dreht, und ein zwölftes Zahnrad (76), das mit dem elften Zahnrad (69) ineinandergreift und sich zusammen mit der dritten Drehwelle (64) dreht, wobei das vierte Paar von Schiebezahnrädern (90) ein Übersetzungsverhältnis aufweist, das sich von den Übersetzungsverhältnissen des ersten Paars von Schiebezahnrädern (86), des zweiten Paars von Schiebezahnrädern (83) und des dritten Paars von Schiebezahnrädern (91) unterscheidet, wobei
die Gruppe (81) von Kupplungen auf der vorgeschalteten Seite und die Gruppe (82) von Kupplungen auf der nachgeschalteten Seite so angeordnet sind, um sich in der Axialrichtung der Eingangswelle (52) zumindest teilweise zu überlappen.

2. Das Stufenautomatikgetriebe gemäß Anspruch 1, bei dem
die erste Kupplung (55) auf einer Seite der zweiten Kupplung (59) angeordnet ist und die vierte Kupplung (66) auf einer Seite der dritten Kupplung (70) angeordnet ist, und
die erste Kupplung (55) und die vierte Kupplung (66) angeordnet sind, um sich in der Axialrichtung der Eingangswelle (52) zumindest teilweise zu überlappen, und die zweite Kupplung (59) und die dritte Kupplung (70) angeordnet sind, um sich in der Axialrichtung der Eingangswelle (52) zumindest teilweise zu überlappen.

3. Das Stufenautomatikgetriebe gemäß Anspruch 1 oder 2, bei dem
das vierte Paar der Schiebezahnräder (90) bezüglich der vierten Kupplung (66) auf der gleichen Seite angeordnet ist, auf der das erste Paar von Schiebezahnrädern (86) bezüglich der ersten Kupplung (55) angeordnet ist, und
das dritte Paar von Schiebezahnrädern (91) bezüglich der dritten Kupplung (70) auf der gleichen Seite angeordnet ist, auf der das zweite Paar von Schiebezahnrädern (83) bezüglich der zweiten Kupplung (59) angeordnet ist.

4. Das Stufenautomatikgetriebe gemäß Anspruch 3, bei dem
die erste Kupplung (55) und die zweite Kupplung (59) zwischen dem ersten Paar von Schiebezahnrädern (86) und dem zweiten Paar von Schiebezahnrädern (83) angeordnet sind, und
die dritte Kupplung (70) und die vierte Kupplung (66) zwischen dem dritten Paar von Schiebezahnrädern (91) und dem vierten Paar von Schiebezahnrädern (90) angeordnet sind.

5. Das Stufenautomatikgetriebe gemäß Anspruch 3 oder 4, bei dem
das erste Paar von Schiebezahnrädern (86) und das vierte Paar von Schiebezahnrädern (90) angeordnet sind, um einander in der Axialrichtung der Eingangswelle (52) zumindest teilweise zu überlappen, und
das zweite Paar von Schiebezahnrädern (83) und das dritte Paar von Schiebezahnrädern (91) angeordnet sind, um einander in der Axialrichtung der Eingangswelle (52) zumindest teilweise zu überlappen.

6. Das Stufenautomatikgetriebe gemäß einem der Ansprüche 1 bis 5, bei dem
das zweite Paar von Schiebezahnrädern (83) ein Übersetzungsverhältnis aufweist, das kleiner ist als dasjenige des ersten Paars von Schiebezahnrädern (86),
die erste Kupplung (55) in Eingriff genommen ist, wenn die Drehgeschwindigkeit der Eingangswelle (52) gleich oder höher ist als eine erste Drehgeschwindigkeit, und außer Eingriff genommen ist, wenn die Drehgeschwindigkeit der Eingangswelle (52) niedriger ist als die erste Drehgeschwindigkeit,
die zweite Kupplung (59) in Eingriff genommen ist, wenn die Drehgeschwindigkeit der Eingangswelle (52) gleich oder höher ist als eine zweite Drehgeschwindigkeit, die höher ist als die erste Drehgeschwindigkeit, und außer Eingriff genommen ist, wenn die Drehgeschwindigkeit der Eingangswelle (52) niedriger ist als die zweite Drehgeschwindigkeit, und
das vierte Zahnrad (65) und das fünfte Zahnrad (87) gleich sind.

7. Das Stufenautomatikgetriebe gemäß einem der Ansprüche 1 bis 6, bei dem
die dritte Kupplung (70) und die vierte Kupplung (66) hydraulische Kupplungen sind, die durch hydraulischen Druck in Eingriff genommen sind/außer Eingriff gebracht sind, und
wenn entweder die dritte Kupplung (70) oder die vierte Kupplung (66) in Eingriff genommen ist, die andere Kupplung außer Eingriff genommen ist.

8. Ein Motorrad, das das Stufenautomatikgetriebe (31) gemäß einem der Ansprüche 1 bis 7 aufweist.

## Revendications

1. Transmission automatique étagée avec quatre ou plusieurs vitesses comprenant un arbre d'entrée (52) et un arbre de sortie (33), la transmission automatique étagée comprenant:
un premier arbre de rotation (53), un deuxième arbre de rotation (54) et un troisième arbre de rotation (64) qui est connecté à l'arbre de sortie (33) ou qui forme l'arbre de sortie (33), qui sont disposés respectivement dans une direction orthogonale à une direction axiale de l'arbre d'entrée (52);
un premier embrayage (55) comprenant un élément d'embrayage du côté de l'entrée (56) qui tourne ensemble avec l'arbre d'entrée (52), et un élément d'embrayage du côté de la sortie (57) qui est à même de tourner par rapport à l'arbre d'entrée (52);
une première paire d'engrenages de changement de vitesse (86) comprenant un premier engrenage (58) qui tourne ensemble avec l'élément d'embrayage du côté de la sortie (57) du premier embrayage (55), et un deuxième engrenage (63) qui engrène avec le premier engrenage (58) et tourne ensemble avec le premier arbre de rotation (53);
un deuxième embrayage (59) comprenant un élément d'embrayage du côté de l'entrée (61) qui tourne ensemble avec l'arbre d'entrée (52), et un élément d'embrayage du côté de la sortie (60) qui est à même de tourner par rapport à l'arbre d'entrée (52), ledit deuxième embrayage (59) formant avec le premier embrayage (55) un groupe (81) d'embrayages d'un côté amont, et engagé à une vitesse de rotation de l'arbre d'entrée (52) qui est différente de celle à laquelle est engagé le premier embrayage (55);
une deuxième paire de d'engrenages de changement de vitesse (83) comprenant un troisième engrenage (62) qui tourne ensemble avec l'élément d'embrayage du côté de la sortie (60) du deuxième embrayage (59), et un quatrième engrenage (65) qui engrène avec le troisième engrenage (62) et tourne ensemble avec le premier arbre de rotation (53), la deuxième paire d'engrenages de changement de vitesse (83) ayant un rapport d'engrenage qui diffère de celui de la première paire d'engrenages de changement de vitesse (86);
une première paire d'engrenages de transmission (84) comprenant un cinquième engrenage (87) qui tourne ensemble avec le premier arbre de rotation (53), et un sixième engrenage (75) qui engrène avec le cinquième engrenage (87) et tourne ensemble avec le deuxième arbre de rotation (54);
une deuxième paire d'engrenages de transmission (85) comprenant un septième engrenage (74) qui tourne ensemble avec le deuxième arbre de rotation (54), et un huitième engrenage (78) qui engrène avec le septième engrenage (74) et tourne ensemble avec le troisième arbre de rotation (64);
un premier mécanisme de transmission de rotation à sens unique, disposé entre le deuxième arbre de rotation (54) et le septième engrenage (74), qui transmet la rotation du deuxième arbre de rotation (54) au septième engrenage (74) et ne transmet pas la rotation du septième engrenage (74) au deuxième arbre de rotation (54), ou un deuxième mécanisme de transmission de rotation à sens unique (93), disposé entre le troisième arbre de rotation (64) et le huitième engrenage (78), qui transmet une rotation du huitième engrenage (78) au troisième arbre de rotation (64) et ne transmet pas de rotation du troisième arbre de rotation (64) au huitième engrenage (78);
un troisième mécanisme de transmission de rotation à sens unique (96), disposé entre le deuxième engrenage (63) et le premier arbre de rotation (53), qui transmet une rotation du deuxième engrenage (63) au premier arbre de rotation (53) et ne transmet pas de rotation du premier arbre de rotation (53) au deuxième engrenage (63), ou un quatrième mécanisme de transmission de rotation à sens unique, disposé entre l'arbre d'entrée (52) et le premier engrenage (58), qui transmet une rotation de l'arbre d'entrée (52) au premier engrenage (58) et ne transmet pas de rotation du premier engrenage (58) à l'arbre d'entrée (52);
un troisième embrayage (70) comprenant un élément d'embrayage du côté de l'entrée (71) qui tourne ensemble avec le deuxième arbre de rotation (54), et un élément d'embrayage du côté de la sortie (72) qui est à même de tourner par rapport au deuxième arbre de rotation (54);
une troisième paire d'engrenages de changement de vitesse (91) comprenant un neuvième engrenage (73) qui tourne ensemble avec l'élément d'embrayage du côté de la sortie (72) du troisième embrayage (70), et un dixième engrenage (77) qui engrène avec le neuvième engrenage (73) et tourne ensemble avec le troisième arbre de rotation (64); la troisième paire d'engrenages de changement de vitesse (91) ayant un rapport d'engrenage qui diffère des rapports d'engrenage de la première paire d'engrenages de changement de vitesse (86) et de la deuxième paire d'engrenages de changement de vitesse (83);
un quatrième embrayage (66) comprenant un élément d'embrayage du côté de l'entrée (67) qui tourne ensemble avec le deuxième arbre d'entrée (54), et un élément d'embrayage du côté de la sortie (68) qui est à même de tourner par rapport au deuxième arbre d'entrée (54), le quatrième embrayage (66) formant avec le troisième embrayage (70) un groupe (82) d'embrayages d'un côté aval, et engagé à une vitesse de rotation du deuxième arbre de rotation (54) qui est différente de celle à laquelle est engagé le troisième embrayage (70); et
une quatrième paire d'engrenages de changement de vitesse (90) comprenant un onzième engrenage (69) qui tourne ensemble avec l'élément d'embrayage du côté de la sortie (68) du quatrième embrayage (66), et un douzième engrenage (76) qui engrène avec l'onzième engrenage (69) et tourne ensemble avec le troisième arbre de rotation (64); la quatrième paire d'engrenages de changement de vitesse (90) ayant un rapport d'engrenage qui diffère des rapports d'engrenage de la première paire d'engrenages de changement de vitesse (86), de la deuxième paire d'engrenages de changement de vitesse (83) et de la troisième paire d'engrenages de changement de vitesse (91); dans laquelle
le groupe (81) d'embrayages du côté amont et le groupe (82) d'embrayages du côté aval sont disposés de manière à se recouvrir au moins partiellement dans une direction axiale de l'arbre d'entrée (52).

2. Transmission automatique étagée selon la revendication 1, dans laquelle
le premier embrayage (55) est situé d'un côté du deuxième embrayage (59) et le quatrième embrayage (66) est situé d'un côté du troisième embrayage (70), et
le premier embrayage (55) et le quatrième embrayage (66) sont disposés de manière à se recouvrir au moins partiellement dans la direction axiale de l'arbre d'entrée (52), et le deuxième embrayage (59) et le troisième embrayage (70) sont disposés de manière à se recouvrir au moins partiellement dans la direction axiale de l'arbre d'entrée (52).

3. Transmission automatique étagée selon la revendication 1 ou 2, dans laquelle
la quatrième paire d'engrenages de changement de vitesse (90) est située par rapport au quatrième embrayage (66) du même côté sur lequel est située la première paire d'engrenages de changement de vitesse (86) par rapport au premier embrayage (55), et
la troisième paire d'engrenages de changement de vitesse (91) est située par rapport au troisième embrayage (70) du même côté sur lequel est située la deuxième paire d'engrenages de changement de vitesse (83) par rapport au deuxième embrayage (59).

4. Transmission automatique étagée selon la revendication 3, dans laquelle
le premier embrayage (55) et le deuxième embrayage (59) sont situés entre la première paire d'engrenages de changement de vitesse (86) et la deuxième paire d'engrenages de changement de vitesse (83), et
le troisième embrayage (70) et le quatrième embrayage (66) sont situés entre la troisième paire d'engrenages de changement de vitesse (91) et la quatrième paire d'engrenages de changement de vitesse (90).

5. Transmission automatique étagée selon la revendication 3 ou 4, dans laquelle
la première paire d'engrenages de changement de vitesse (86) et la quatrième paire d'engrenages de changement de vitesse (90) sont disposés de manière à se recouvrir au moins partiellement dans la direction axiale de l'arbre d'entrée (52), et la deuxième paire d'engrenages de changement de vitesse (83) et la troisième paire d'engrenages de changement de vitesse (91) sont disposés de manière à se recouvrir au moins partiellement dans la direction axiale de l'arbre d'entrée (52).

6. Transmission automatique étagée selon l'une quelconque des revendications 1 à 5, dans laquelle
la deuxième paire d'engrenages de changement de vitesse (83) présente un rapport d'engrenage qui est inférieur à celui de la première paire d'engrenages de changement de vitesse (86),
le premier embrayage (55) est engagé lorsque la vitesse de rotation de l'arbre d'entrée (52) est égale ou supérieure à une première vitesse de rotation, et est dégagé lorsque la vitesse de rotation de l'arbre d'entrée (52) est inférieure à la première vitesse de rotation,
le deuxième embrayage (59) est engagé lorsque la vitesse de rotation de l'arbre d'entrée (52) est égale ou supérieure à une deuxième vitesse de rotation qui est supérieure à la première vitesse de rotation, et est dégagé lorsque la vitesse de rotation de l'arbre d'entrée (52) est inférieure à la deuxième vitesse de rotation, et
le quatrième engrenage (65) et le cinquième engrenage (87) sont communs.

7. Transmission automatique étagée selon l'une quelconque des revendications 1 à 6, dans laquelle
le troisième embrayage (70) et le quatrième embrayage (66) sont des embrayages hydrauliques qui sont engagés/dégagés par une pression hydraulique, et
lorsque l'un parmi le troisième embrayage (70) et le quatrième embrayage (66) est engagé, l'autre embrayage est dégagé.

8. Motocyclette comprenant la transmission automatique étagée (31) selon l'une quelconque des revendications 1 à 7.
